# EUROPÄISCHE PATENTANMELDUNG

(11) **EP 4 764 485 A1**
(43) Veröffentlichungstag der Anmeldung: **24.06.2026**
(21) Anmeldenummer: 25213047.1
(22) Anmeldetag: 03.11.2025
(51) Int. Cl.: G01N 27/622

(54) **SYSTEM ZUR DETEKTION UND ANALYSE EINER IN EINEM PROBENFLUIDSTROM ENTHALTENEN PROBE**

(30) Priorität: 19.12.2024 DE 102024139063
(71) Anmelder: Bruker Optics GmbH & Co. KG, 76275 Ettlingen (DE)
(72) Erfinder: Renner, Uwe, 04105 Leipzig (DE)
(74) Vertreter: Gulde & Partner

(57) **Zusammenfassung**

Die Erfindung betrifft ein System (1) zur Detektion und Analyse einer in einem Probenfluidstrom enthaltenen Probe. Das System (1) umfasst eine Detektionsvorrichtung (100) zur Analyse der Probe, wobei die Detektionsvorrichtung (100) eine Probenkammer (101) mit einem Probenfluideinlass (102) zur Zufuhr des Probenfluidstroms und einem Fluidauslass (103) enthält, in die die Probe zur Analyse eingebracht wird. Ferner umfasst das System (1) eine Mischkammer (200) zur Vermischung eines Verdünnungsstroms und eines Probenzufuhrstroms, die einen Probenzufuhrstromeinlass (201) und einen Ausgleichsstromauslass (202) sowie einen Verdünnungsstromeinlass (203) und einen Mischkammerstromauslass (204) aufweist, wobei der Verdünnungsstromeinlass (203) mit dem Fluidauslass (103) und der Mischkammerstromauslass (204) mit dem Probenfluideinlass (102) zur Ausbildung eines Detektionskreislaufs fluidleitend verbunden ist. Darüber hinaus verfügt das System (1) über eine erste Fördereinrichtung (300), die ausgebildet ist, den Detektionskreislauf zur Förderung des Probenfluidstroms anzutreiben sowie eine Probenzufuhrvorrichtung (400) umfassend einen mittels eines ersten Strömungspfads (401) mit dem Probenzufuhrstromeinlass (201) fluidleitend verbundenen Probeneinlass (402) zur Einleitung der Probe in das System (1) und einen mittels eines zweiten Strömungspfads (403a, 403b) mit dem Ausgleichsstromauslass (202) fluidleitend verbundenen Probenauslass (404). Das System (1) umfasst ferner eine zweite Fördereinrichtung (500) zur Förderung eines die Probe enthaltenden Trägerstroms vom Probeneinlass (402) zum Probenauslass (404). Die Erfindung betrifft ferner eine Probenaufnahmevorrichtung zur Aufnahme und Dosierung einer Probe für das erfindungsgemäße System (1) und ein Verfahren zur Zufuhr und Analyse einer in einem Probenfluidstrom enthaltenen Probe mit einem erfindungsgemäßen System (1).

## Beschreibung

Die Erfindung betrifft ein System zur Detektion und Analyse einer in einem Probenfluidstrom enthaltenen Probe, das eine Detektionsvorrichtung, eine Mischkammer, eine erste Fördereinrichtung, eine Probenzufuhrvorrichtung sowie eine zweite Fördereinrichtung umfasst, eine Probenaufnahmevorrichtung zur Aufnahme und Dosierung einer Probe für das erfindungsgemäße System und ein Verfahren zur Zufuhr und Analyse einer in einem Probenfluidstrom enthaltenen Probe mit einem erfindungsgemäßen System.

### Technologischer Hintergrund

Bekannte Einlasssysteme für fluide Proben in eine chemische Detektionsvorrichtung bzw. in ein Spektrometer lassen sich entsprechend der Art der Zufuhr nach Direkteinlass und Membraneinlass unterscheiden. Bei einem Direkteinlass erfolgt entweder ein direkter konvektiver Fluss bzw. ein Teilfluss der Probe aus der Umgebung oder passiv durch Diffusion über eine Öffnung in die Probenkammer des Spektrometers, wohingegen die Probe bei einem Membraneinlass stattdessen indirekt durch Diffusion über eine Membran in die Probenkammer gelangt, da die Membran den direkten Fluss behindert. Unter normalen Betriebsbedingungen besteht ein Druckausgleich zwischen der Probenkammer und der Umgebung, aus welcher die Probe zugeführt wird. Bei einer Druckänderung der Umgebung, etwa durch rasche Höhenänderungen, stellt sich dieser Druckausgleich bei einem Direkteinlass nahezu unmittelbar ein, wohingegen bei einem Membraneinlass dieser in der Regel nur langsam durch Permeation durch die Membran erfolgen kann.

Bei einem Direkteinlass gelangt die Probe in der Regel durch einen konvektiven Probenfluidstrom, in einigen Fällen als reiner Probendiffusionsstrom oder auch als eine Überlagerung beider Mechanismen aus der Umgebung direkt in das Innere der Probenkammer der Detektionsvorrichtung. Aus dieser gelangt ein verbleibender Teil der Probe konvektiv zu einem Auslass. Somit wird eine Probenanreicherung in der Detektionsvorrichtung und im Fall von Gasen deren Kompression und eine damit verbundene thermodynamische Zustandsänderung in der Detektionsvorrichtung verhindert. Die Massenströme sind aufgrund der geringen Fließgeschwindigkeiten meist laminar.

Für eine kontinuierliche Probenzufuhr wird ein Massenstrom bzw. Volumenstrom bereitgestellt. Ein zu hoher Massenstrom bzw. Volumenstrom für die Probe, welcher aber notwendig ist, um die Probe durch Ansaugen bei hohem Druck bzw. hohem Volumenstrom aus der Umgebung der Detektionsvorrichtung bereitzustellen, kann zu Überdosierung und unerwünschten Anreicherungen, Ablagerungen oder Kontamination in den Zuführungen und insbesondere in der Probenkammer führen.

Beim Membraneinlass gelangt die Probe indirekt über Diffusion durch eine dünne, feinporige Schicht bzw. Membran in die Probenkammer der Detektionsvorrichtung, wobei unter üblichen Betriebsbedingungen ein Druckausgleich zwischen beiden Seiten der Membran besteht. Der Probenfluss durch die Membran erfolgt bei der Diffusion nach dem ersten Fickschen Gesetz. Nach diesem ist die Teilchenstromdichte proportional zum negativen Konzentrationsgradienten der Probe zwischen den beiden Seiten der Membran. Die Proportionalitätskonstante ist der temperaturabhängige Diffusionskoeffizient, der vom Membranmaterial, dessen Struktur, sowie von Porendurchmesser, Porenlänge, Porenvernetzung bzw. Porenverzweigung und probenspezifisch von der physikalischen und chemischen Wechselwirkung der Probenmoleküle mit dem Membranmaterial abhängt.

Die Membran hat einen hohen Strömungswiderstand, wodurch bei geringen Druckdifferenzen kein nennenswerter konvektiver Probenfluss durch sie erfolgt. Der Membraneinlass blockiert somit einen direkten konvektiven Trägerstrom aus der Umgebung in die Probenkammer. Da reine Diffusion durch Brownsche Molekularbewegung dominiert wird, kann keine mittlere Strömungsgeschwindigkeit durch die Membran definiert werden, sondern die Ausbreitung erfolgt gemäß der zeitlichen Entwicklung des mittleren Verschiebungsquadrats. Membraneinlass und Direkteinlass unterscheiden sich daher grundlegend im physikalischen Verhalten. Bei größeren Druckdifferenzen, beispielsweise durch rasche Höhenänderungen, können zusätzlich konvektive Flüsse auftreten, die als Permeation bezeichnet werden und proportional zum Druckgradienten sind. Eine zu hohe Druckdifferenz belastet jedoch die dünne Membran mechanisch und kann sie beschädigen, weshalb Druckausgleichselemente eingesetzt werden. Neben dem Druck ist auch der Temperaturbereich für die Membranmaterialien begrenzt, da Abweichungen irreversible Schäden verursachen können. Bei der Probenentnahme strömt die Probe konvektiv an der Membran vorbei, wobei an der Membranoberfläche aufgrund der Haftbedingung keine Strömungsgeschwindigkeit vorliegt.

Der Stoffaustausch mit der Membran erfolgt in der Übergangsschicht rein durch Diffusion.

Der Konzentrationsgradient und der Probenfluss durch die Membran können durch dünnere Schichten erhöht werden, wobei fertigungstechnische und mechanische Stabilitätsgrenzen, z. B. bei der Befestigung, zu beachten sind. Eine größere Membranfläche steigert ebenfalls den Probenfluss, ist jedoch durch Platz und Befestigungsmöglichkeiten begrenzt. Die Diffusion und der Probenfluss nehmen mit steigender Temperatur zu und werden meist durch eine Membranheizung geregelt. Obergrenzen der Temperatur, bedingt durch Materialeigenschaften, behindern die Diffusion von Molekülen mit höherem Molekulargewicht und führen zu einer Anreicherung an der Membran.

Die durch die Membran diffundierte Probe wird vorteilhaft durch einen Fluidstrom, dem Membranfluss, von der Membran aufgenommen und in Richtung der Probenkammer transportiert. Die Probe kann aber auch ohne einen konvektiven Strom, wenn auch viel langsamer, in Richtung Probenkammer diffundieren.

Eine Substanzabhängigkeit der Diffusion durch die Membran kann nachteilig sein, wenn z. B. größere Probenmoleküle mit hohem Molekulargewicht untersucht werden sollen und die Porenstruktur der Membran für kleine Moleküle ausgelegt wurde, da dann deren Bewegung stark behindert wird oder diese gar nicht durch die Membran diffundieren können. Infolgedessen wird deren Nachweis zeitlich stark verzögert bzw. unmöglich. Zudem können sich Moleküle in der Membranschicht anreichern. Wegen der begrenzten Temperaturstabilität der Membran lassen sich diese hieraus nur schwer und zeitaufwendig etwa in einem Reinigungsvorgang wieder herauslösen, was die Einsatzbereitschaft des Spektrometers bzw. der Detektorvorrichtung einschränkt.

WO 2017/055871 A1 beschreibt einen Detektoreinlass zum Bereitstellen eines Aerosols für eine analytische Vorrichtung, wobei der Detektoreinlass einen Einlass zum Aufnehmen eines Stroms eines gasförmigen Fluids umfasst, wobei ein Teil des Stroms des gasförmigen Fluids durch eine Heizvorrichtung stärker erhitzt wird als ein anderer Teil, der anschließend mit dem einen Teil vermischt wird.

WO 2016/059407 A1 offenbart ein Ionen-Mobilitäts-Spektrometer, IMS, mit einem Einlass für Probengas und Driftgasstrom. Der Einlass weist eine Öffnung auf, die über einen Controller steuerbar ist, sodass sie sich öffnet, um einen Gasstrom zu erhalten, der eine Probe durch den Einlass mitreißt, und die auch so gesteuert werden kann, dass sie den Durchfluss durch den Probeneinlass einschränkt.

WO 2010/139861 A1 beschreibt eine Vorrichtung zur Detektion von Aerosolnanopartikeln. Hierbei wird ein partikelfreier Trägerstrom zunächst mit einem Kondensationsmedium gesättigt, woraufhin der gesättigte partikelfreie Trägerstrom mit einem Aerosolgasstrom gemischt wird. Nach der Durchmischung wird der Gasstrom zur Detektionsvorrichtung geleitet.

WO 2015/019059 A1 offenbart ein IMS-Spektrometer, das so ausgebildet ist, dass es eine in das Spektrometer aufgenommene Luftprobe erwärmt, um von dieser Luftprobe mitgeführte Aerosole zu verdampfen, bevor die Probe zur Analyse ionisiert wird. Die Luftprobe kann im Einlass des Spektrometers, im Reaktionsbereich, in dem die Probe ionisiert wird, oder in einer Kammer des Spektrometers erhitzt werden, bevor die Probe in den Reaktionsbereich geleitet wird.

DE 198 44 605 A1 beschreibt eine Vorrichtung zum Einleiten von Feststoff-Partikel enthaltenden Gasen in eine Probenkammer, wobei vor der Probenkammer eine Düse zum Zuführen des Partikel-Gas-Gemisches angeordnet ist. Die Düse mündet in eine Kammer, aus der expandierendes Gas des Partikel-Gas-Gemisches abgesaugt werden kann. Die Düse und die Kammer sind in einem als Einheit ein- und ausbaubaren Einschub angeordnet.

WO 2022 / 024 011 A1 offenbart eine Fluid-Messkammer mit Umlaufweg zwischen einem ersten Strömungssteuerelement, einer Fluid-Speicherkammer und einem zweiten Strömungssteuerelement, wobei in der Speicherkammer ein Sensor zur Bestimmung der Analytenkonzentration angeordnet ist. Die Messkammer umfasst eine Fluidverdünnungseinheit, die ein Referenzfluid definierter Konzentration in den Umlaufweg einbringt.

DE 697 32 693 T2 offenbart ein rezirkulierendes IMS/GC-IMS-System, bei dem ein am Auslass entnommener Trägergasstrom über Filter gereinigt, durch eine Pumpe im Kreislauf geführt und in Höhe des Probengasstroms über einen Bypass abgeführt wird. Die Probe wird in den Rückführstrom eingespeist, optional mit Referenzgas verdünnt, und über eine beheizte Übertragungsleitung sowie eine vorgeschaltete Gaschromatographiesäule in den Analysator geleitet.

Der Erfindung liegt nun die Aufgabe zugrunde, eine Vorrichtung und ein entsprechendes Verfahren bereitzustellen, die die genannten Nachteile des Stands der Technik zumindest teilweise überwinden und eine verbesserte und kontrollierte Bereitstellung eines die Probe enthaltenden Probenfluidstroms zur Analyse mit der Vorrichtung zu ermöglichen.

### Zusammenfassung der Erfindung

Diese Aufgabe wird durch ein System zur Detektion und Analyse einer in einem Probenfluidstrom enthaltenen Probe sowie ein entsprechendes Verfahren mit den Merkmalen der unabhängigen Ansprüche gelöst. Vorteilhafte Ausgestaltungen der Erfindung sind in den Unteransprüchen definiert.

Erfindungsgemäß wird ein System zur Detektion und Analyse einer in einem Probenfluidstrom enthaltenen Probe bereitgestellt. Das System umfasst eine Detektionsvorrichtung zur Analyse der Probe, wobei die Detektionsvorrichtung eine Probenkammer mit einem Probenfluideinlass zur Zufuhr des Probenfluidstroms und einem Fluidauslass enthält, in die die Probe zur Analyse eingebracht wird. Ferner umfasst das System eine Mischkammer zur Vermischung eines Verdünnungsstroms und eines Probenzufuhrstroms, die einen Probenzufuhrstromeinlass und einen Ausgleichsstromauslass sowie einen Verdünnungsstromeinlass und einen Mischkammerstromauslass aufweist, wobei der Verdünnungsstromeinlass mit dem Fluidauslass und der Mischkammerstromauslass mit dem Probenfluideinlass zur Ausbildung eines Detektionskreislaufs fluidleitend verbunden ist. Darüber hinaus verfügt das System über eine erste Fördereinrichtung, die ausgebildet ist, den Detektionskreislauf zur Förderung des Probenfluidstroms anzutreiben sowie eine Probenzufuhrvorrichtung umfassend einen mittels eines ersten Strömungspfads mit dem Probenzufuhrstromeinlass fluidleitend verbundenen Probeneinlass zur Einleitung der Probe in das System und einen mittels eines zweiten Strömungspfads mit dem Ausgleichsstromauslass fluidleitend verbundenen Probenauslass.

Das System umfasst ferner eine zweite Fördereinrichtung zur Förderung eines die Probe enthaltenden Trägerstroms vom Probeneinlass zum Probenauslass.

Mit anderen Worten umfasst der erste Strömungspfad eine erste Zuführleitung, um den Trägerstrom über den Probeneinlass einzuleiten und den Probenzufuhrstrom zum Probenträgerstromeinlass zu leiten, und der zweite Strömungspfad umfasst eine zweite Zuführleitung, um den Ausgleichsstrom vom Ausgleichsstromauslass abzuleiten und den Trägerstrom zum Probenauslass zu leiten. Das System umfasst demnach eine Eingangsseite aufweisend den Probeneinlass und den Probenauslass, die Mischkammer und eine mit der Detektionsvorrichtung über den Verdünnungsstromeinlass und den Mischkammerstromauslass in Verbindung stehende Ausgangsseite, wobei letztere mit dem Detektionskreislauf verbunden ist, der mit der ersten Fördereinrichtung aufrechterhalten wird. Der Trägerstrom wird durch die zweite Fördereinrichtung vom Probeneinlass zum Probenauslass erzeugt. Mit der konvektiven Probenzufuhr mittels des Probenzufuhrstroms in die Mischkammer erfolgt ein konvektiver Ausgleichsstrom aus dieser infolge des Gesetzes der Gesamtmassenflusserhaltung, ohne dass ein zusätzlicher Fördermechanismus erforderlich ist. Somit wird zugleich ein Druckausgleich zwischen der mittels Probenzufuhrstrom zugeführten Probe und einem Innenraum der Probenkammer geschaffen. Insbesondere bei Gasspektrometern wird eine Kompression bzw. ein "Auspumpen" des Innenraums der Probenkammer und eine damit verbundene nachteilige physikalische Zustandsänderung wie z. B. des Druckes vermieden. Während eines Dosiervorgangs bei der Analyse gelangt die Probe somit indirekt über den Mischkammerstromauslass in die Detektionsvorrichtung, da sie zuvor mit einem konvektiven Fluidstrom aus dem Verdünnungsstromeinlass in der Mischkammer vermischt wird. Das System lässt sich auch zur Veranschaulichung als Äquivalent zur Elektrotechnik mit den vier grundlegenden Ein- und Ausgängen, jeweils zwei auf der Eingangsseite und zwei auf der Ausgangseite, als Strömungsvierpol beschreiben, in dessen Inneren eine Transformation (Vermischung, Umwandlung, Zustandsänderung) der konvektiven Zu- und Abflüsse mittels Funktionselementen erfolgt. Probeneinlass und Probenauslass bilden einen probenseitigen Strömungsvierpol-Eingang, der mit einer Umgebung verbunden ist und an den Öffnungen einen Umgebungsdruck annimmt. Der Strömungsvierpol besitzt ferner die Mischkammer mit dem Verdünnungsstromeinlass und dem Mischkammerstromauslass, wobei letzterer in die Probenkammer der Detektionsvorrichtung führt. Verdünnungsstromeinlass und Mischkammerstromauslass bilden den Strömungsvierpol-Ausgang. Der konvektive Fluidstrom mit definierten analytischen, z. B. chemisch hinsichtlich der Reinheit, Eigenschaften von Verdünnungsstromeinlass nach Mischkammerstromauslass wird mittels der ersten Fördereinrichtung wie einer Pumpe erzeugt. Dabei sind Massenströme von Verdünnungsstromeinlass und Mischkammerstromauslass betragsmäßig gleich groß. Vorteilhaft ist der konvektive Fluidstrom über den Verdünnungsstromeinlass in die Mischkammer so beschaffen, dass ohne Probendosierung keine Spuren oder Signaturen mittels der Detektionsvorrichtung nachweisbar sind. Die Charakterisierung als Strömungsvierpol ist analog einer der Systemtheorie bekannten Sichtweise und wird speziell in der Elektronik angewendet. Die Druckgradienten am Eingang und am Ausgang entsprechen äquivalent den Spannungen eines elektronischen Vierpols. Ein wesentliches Element ist die Mischkammer, in welcher die Vermischung bzw. Transformation (vgl. Transformator in der Elektrotechnik) der hierin mündenden konvektiven Ein- und Ausgangs-Fluidströme stattfindet. Ein Merkmal ist ferner die konvektive Rückkopplung der Fluidströme durch den konvektiven Ausgleichsstrom aus dem Ausgleichsstromauslass bzw. dem Probenauslass. Die Probe wird folglich mittels dem fluiden Trägerstrom über den Probeneinlass konvektiv angesaugt. Dabei besitzt sie zum Beispiel auch dessen Aggregatzustand. Das Fluid wird in der Betriebsart Dosieren vom Probeneinlass durch die zweite Fördereinrichtung, z. B. einer Pumpe, bevorzugt ausgangsseitig über den Probeauslass angesaugt. Alternativ kann es mit einer Fördereinrichtung in den Probeneinlass gedrückt werden.

Die Umgebung kann sich auf verschiedene Bereiche beziehen. Sie kann die eigentliche Umgebung meinen, aber auch einen verbindbaren Desorber oder Verdampfer.

Der konvektive Strömungsvierpol ist mit anderen Worten eine Verallgemeinerung eines Membraneinlasses, bei welchem der Strömungsvierpol-Eingang vom Strömungsvierpol-Ausgang durch eine Membran mit diffusivem Stoffaustausch getrennt ist. In der so getroffenen Verallgemeinerung kann der Membraneinlass als diffusiver Strömungsvierpol verstanden werden, bei dem der Probenfluss vom Probeneinlass in Richtung Mischkammerstromauslass über die Membran in die Mischkammer diffusiv erfolgt. Beim vorliegenden konvektiven Strömungsvierpol hingegen gelangt die Probe durch einen konvektiven Probenfluss über den Probenzufuhrstromeinlass in die Mischkammer. Beim konvektiven Strömungsvierpol ist der diffusive Probenfluss im Fluidstrom im Vergleich zum konvektiven Probenfluss vernachlässigbar, d. h. er ist mindestens zehnmal kleiner. Der konvektive Strömungsvierpol muss einen zum Massenstrom vom Probeneinlass in die Mischkammer gleichgroßen Massenstrom aus der Mischkammer zum Probeauslass sicherstellen. Im Allgemeinen wird dies durch die betragsmäßige Gleichheit des Massenstroms des Verdünnungsstromeinlasses und des Massenstroms des Mischkammerstromauslasses, die mit dem Detektionskreislauf verbunden sind, als Ergebnis der Massenstromerhaltung erreicht.

Mit dem System wird somit der Vorteil des Direkteinlasses gegenüber des Membraneinlass, während der Probendosierung auch größere Moleküle nahezu unverzögert analysieren zu können, mit dem Vorteil der indirekten Probenzufuhr des Membraneinlass, d. h. den durch die Membran fließenden Probenanteil in einem durch den Kreislauf der Detektionsvorrichtung vom Trägerstrom der Probe separierten Verdünnungsstrom vereinen und verdünnen zu können, zusammengeführt. Zudem werden der Nachteil des Direkteinlass eines nicht beliebig reduzierbaren hohen Trägerstroms aus der Umgebung bzw. Probenzufuhrstroms und der Nachteil des Membraneinlass eines durch Diffusion behinderten und zeitlich verzögerten Durchlasses größer Moleküle, durch die erfindungsgemäße Zufuhr in die Mischkammer vermieden oder reduziert. Die Probenkammer der Detektionsvorrichtung wird als ein geschlossenes System betrachtet, das weitestgehend frei von störenden Verunreinigungen ist, welche die Probenanalyse stören würden. Hierzu wird dieses geschlossene System über ein Kreislaufsystem gespült. Die Probe gelangt mit Hilfe desselben Kreislaufes bzw. eines Teilkreislaufs in die Probenkammer. Eingebrachte und nach der Analyse verbleibende Probenanteile werden durch das Kreislaufsystem herausbefördert. Durch den mit diesem System möglichen kontinuierlichen Betrieb, im Gegensatz zu einem diskontinuierlichen Betrieb mit pulsartiger Dosierung, sind über eine längere Dauer kontinuierliche Messungen zur Verbesserung der Detektionsleistung möglich. Durch die damit mögliche erhöhte Datenmenge lässt sich eine Erhöhung des Signal-Rausch-Verhältnisses z. B. in Spektren mittels Datenakkumulation oder Datenmodulation erreichen. Die Erfindung ermöglicht eine kontinuierliche Probenzufuhr mittels fluider Trägermedien wie Gasen, aber auch Flüssigkeiten über einen längeren Zeitraum, um z. B. ein besseres Signal-Rausch-Verhältnis bei der Datenaufnahme durch Mehrfachakkumulation oder bei kontinuierlicher Modulation zu erreichen. Im Unterschied zu einem Direkteinlass wird der Probenzufuhrstrom nicht direkt in die Detektionsvorrichtung geleitet, sondern nur ein Anteil, welcher in der Mischkammer mit einem weiteren Fluidstrom vermischt wird. Der charakteristische Unterschied zu einem Membraneinlasssystem besteht darin, dass die beidseitig getrennte Fluidik an der Membran durch die Mischkammer mit einem konvektiven Austauschsystem ersetzt wird, so dass diese in Systemen mit Membraneinlass als Äquivalent ersetzt werden kann.

Das System umfasst mit anderen Worten ein modulares Probeneinlasssystem für eine Detektionsvorrichtung, in der die Probe durch einen konvektiven Fluidfluss angesaugt wird. Mit den beschriebenen Komponenten ist die Anordnung allgemein zur Dosierung fluider Proben (Gase, Flüssigkeiten) in einer Detektionsvorrichtung mit konvektiver Probenzufuhr geeignet.

Die Mischkammer ist vorzugsweise als separierbares, also entnehmbares und einsetzbares, Modul ausgebildet. Hierdurch kann sie beispielsweise den Membraneinlass eines lonenmobilitätsspektrometers substituieren.

Detektionsvorrichtungen zum Nachweis fluider Proben gibt es in verschiedenen Ausführungsformen. Es gibt sie sowohl für gasförmige als auch flüssige Proben. So kann diese in der Probenkammer durch optische Spektroskopie, d. h. mittels elektromagnetischer Wellen, anhand charakteristischer Spektrallinien in den entsprechenden Frequenzbändern direkt analysiert werden. Andererseits lassen sich die nachzuweisenden Substanzen in einer Probe nach einer Wechselwirkung mit einem Medium unter der Wirkung einer Kraft (Druckdifferenz, elektrisches Feld) im relaxierten, unbeschleunigten, d. h. driftenden bzw. wandernden Zustand, hinsichtlich der Laufzeit bzw. Driftzeit mit einem Spektrometer bzw. allgemein in der Detektionsvorrichtungen unterscheiden und bestimmen. Die Probe kann beim Driften im Feld, so einem Druckgradienten, bei der Wechselwirkung mit dem Driftmedium selbst oder einer speziellen, wechselwirkenden Randschicht der strömungsführenden Wand bzw. beider Komponenten ladungsneutral sein (Gas-Chromatographie). Oftmals wird die Probe zum elektronischen Nachweis, z. B. mit einem lonenmobilitätsspektrometer, ionisiert und bewegt sich dann in einem elektrischen Feld und optional mittels weiterer Felder wie einer überlagerten Fluid-Strömung. Das Driftmedium kann gasförmig, flüssig, aber auch fest sein. Beispielhafte Ausführungen solcher Detektoren chemischer Substanzen sind Anordnungen zur Elektrophorese und die elektrochemische Zelle. Die Detektionsvorrichtung kann auch eine Massenspektrometer sein, in das die Probe von der Probenkammer über eine Lochöffnung gelangt.

Die Fördereinrichtungen sind vorzugsweise Pumpen wie Membran- oder Drehschieberpumpen und ähnliche Fördervorrichtungen.

Vorzugsweise ist die zweite Fördereinrichtung stromabwärts des Probenauslasses oder stromaufwärts des Probeneinlasses bezogen auf die Strömungsrichtung des Trägerstroms angeordnet und im erstgenannten Fall mit dem Probenauslass und im zweitgenannten Fall mit dem Probeneinlass fluidleitend verbunden, um den Trägerstrom vom Probeneinlass zum Probenauslass zu bewegen.

Der erste und zweite Strömungspfad sind jeweils eine allgemeine Bezeichnung für einen von dem entsprechenden Fluidstrom zurückgelegten Strömungsweg. Ein Strömungspfad umfasst somit strömungsführende bzw. -leitende Elemente und kann ein Gehäuse, eine Leitung, oder ein funktionales, fluidleitendes Bauteil zwischen Probeneinlass und Probenzufuhrstromeinlass bzw. zwischen Probenauslass und Ausgleichsstromauslass sein. Der Strömungspfad kann auch eine Kombination eines oder mehrerer der genannten Elemente sein und wird dann durch deren Gesamtheit ausgebildet. Der erste und/oder der zweite Strömungspfad kann ein Rohr oder mehrere parallele Rohre (in anderen Worten Kanäle, Kapillaren oder Strömungskanäle) umfassen. Der Probenzufuhrstromeinlass kann eine Öffnung zur Mischkammer oder in einer weiteren Ausführungsform mehrere derartige parallele Öffnungen umfassen. Der Ausgleichsstromauslass kann eine Öffnung aus der Mischkammer oder in einer weiteren Ausführungsform mehrere derartige parallele Öffnungen umfassen.

Sofern im Folgenden Fluidströme beschrieben werden, wobei diese anhand ihres Massen- oder Volumenstrom charakterisiert werden, wird zur Vereinfachung auf den Massenstrom abgestellt. Es liegt eine im Wesentlichen inkompressible Strömung vor, sodass idealerweise keine Dichteänderungen durch Kompression auftreten, weshalb angenommen wird, dass die Dichte verschiedener Bestandteile im Mittel konstant ist und mit Hilfe der Dichte direkt vom Massenstrom auf den Volumenstrom geschlossen werden kann.

Der Trägerstrom, der Probenzufuhrstrom, der Ausgleichsstrom, der Probenfluidstrom und der Verdünnungsstrom werden allgemein auch unter dem Begriff Fluidstrom zusammengefasst. Bei den besagte Fluidströmen handelt es sich insbesondere um Flüssigkeiten, Gase oder Aerosole. Mit anderen Worten ist das Fluid vorzugsweise ein Gas oder eine Flüssigkeit oder eine Mischung aus Gas und Flüssigkeit wie Beispiel ein Aerosol, bei dem kleine Flüssigkeitstropfen in Gas vorliegen. Die im Fluid enthaltene Probe kann gasförmig, flüssig oder fest sein.

Der Trägerstrom wird mittels der gleichen Bezeichnung am Probeneinlass und Probenauslass definiert. Innerhalb des Systems kann sich dessen Zusammensetzung und/oder dessen Massenstrom ändern. Im Falle einer Aufteilung des Trägerstroms kann sich dessen Massenstrom lokal innerhalb des Systems ändern. Aufgrund einer kontinuierlichen Betriebsweise bei der Probenanalyse ist der Trägerstrom am Probeneinlass und am Probenauslass jedoch hinsichtlich seines Massenstroms im Wesentlichen gleich (Abweichungen kleiner als 5%, bevorzugt kleiner als 2%, besonders bevorzugt kleiner als 1%). Seine Zusammensetzung kann sich zwar ändern, hier dient die Bezeichnung Trägerstrom jedoch als funktionale Beschreibung für ein- und austretende Ströme in das und aus dem System bzw. einen Fluidstrom, der zum Transport von Komponenten, vorliegend insbesondere der Probe, dient. Der Massenstrom und die Zusammensetzung können im einfachsten Fall dem Massenstrom und der Zusammensetzung des Probenzufuhrstroms entsprechend, jedoch können sich diese auch voneinander unterscheiden.

Wenn es nicht explizit erwähnt ist, beziehen sich Lagebeziehungen immer auf eine Strömungsrichtung während eines Dosierbetriebs, der sich auf eine Betriebsweise bezieht, bei der der Detektionsvorrichtung eine zu untersuchende Probe zugeführt wird, also mit anderen Worten bezogen auf die Strömungsrichtung des Trägerstroms oder des Probenfluidstroms.

Gemäß einer Ausführungsform sind der Probeneinlass und der Probenzufuhrstromeinlass identisch und/oder sind der Probenauslass und der Ausgleichsstromauslass identisch. Gemäß dieser Ausführungsform sind Trägerstrom und Probenzufuhrstrom identisch. Die beiden Ströme weisen dann im Wesentlichen den gleichen Massenstrom auf. Mit anderen Worten erfolgt hierbei eine Einleitung des Trägerstroms mit der Probe direkt in die Mischkammer ohne weitere dazwischen angeordnete Elemente, sodass Trägerstrom und Probenzufuhrstrom sich entsprechen, und/oder erfolgt eine Ableitung des Trägerstroms, ggf. mit verbleibenden Anteilen der Probe, direkt aus der Mischkammer. Hierbei entsprechen sich Massenstrom von Trägerstrom und Ausgleichsstrom, aufgrund der Vermischung wird sich ihre Zusammensetzung bei einer Dosierung mit einer Probe jedoch voneinander unterscheiden. Der erste Strömungspfad wird also durch Probeneinlass und Probenzufuhrstromeinlass und/oder der zweite Strömungspfad durch Probenauslass und Ausgleichsstromauslass ausgebildet.

Gemäß einer alternativen Ausführungsform sind Probeneinlass und Probenzufuhrstromeinlass separate Elemente und/oder Probenauslass und Ausgleichsstromauslass sind separate Elemente. Mit anderen Worten erfolgt dann hierbei eine Einleitung des Trägerstroms mit der Probe indirekt in die Mischkammer mit zumindest einem weiteren dazwischen angeordnete Element und/oder erfolgt eine Ableitung des Trägerstroms, ggf. mit verbleibenden Anteilen der Probe, indirekt aus der Mischkammer.

Gemäß einer Ausführungsform umfasst der erste und/oder der zweite Strömungspfad eine fluidführende Leitung bzw. einen fluidführenden Kanal. Die Leitung bzw. der Kanal führen die entsprechenden Fluidströme und transportieren sie zwischen Komponenten des Systems. In dieser Ausführung führt der Probeneinlass zumindest teilweise über eine fluidführende Leitung, insbesondere ein Rohr, eine Kapillare oder als verlängerte zylindrische Säule, in die Mischkammer.

Gemäß einer Ausführungsform ist der Probenzufuhrstromeinlass mit dem ersten Strömungspfad mittels einer Verbindungsleitung und/oder der Ausgleichsstromauslass mit dem zweiten Strömungspfad mittels einer Verbindungsleitung fluidleitend verbunden.

Gemäß einer Ausführungsform ist der Probeneinlass mit dem ersten Strömungspfad mittels einer Verbindungsleitung und/oder der Probenauslass mit dem zweiten Strömungspfad mittels einer Verbindungsleitung fluidleitend verbunden ist.

Gemäß einer Ausführungsform ist die Mischkammer ausgebildet, dass im Wesentlichen Druckgleichheit zwischen dem durch den Probenzufuhrstromeinlass in die Mischkammer eintretenden Probenzufuhrstrom und dem durch den Mischkammerstromauslass aus der Mischkammer austretenden Probenfluidstrom besteht, wobei ein Druckunterschied zumindest weniger als 100 Pa beträgt, vorzugsweise weniger als 70 Pa und besonders bevorzugt weniger als 50 Pa beträgt. Dies gilt analog für den durch den Ausgleichsstromauslass aus der Mischkammer austretenden Ausgleichsstrom und den durch den Verdünnungsstromeinlass in die Mischkammer eintretenden Verdünnungsstrom. Hierdurch ist es in einer bevorzugten Betriebsweise möglich, dass im Wesentlichen kein Druckunterschied zwischen Probenzufuhrstromeinlass in die Mischkammer und Mischkammerstromauslass aus der Mischkammer besteht, der zumindest jedoch weniger als 100 Pa beträgt. Äquivalent dazu ist der Druckunterschied zwischen Verdünnungsstromeinlass und Ausgleichsstromauslass.

Das erfindungsgemäße System ermöglicht eine zeitlich-kontinuierliche, konvektive Zufuhr einer fluiden, im Allgemeinen inhomogenen oder mehrphasigen, Probe in eine Detektionsvorrichtung wie einem Spektrometer, in welches diese indirekt mit einem weiteren konvektiven Strom aufgenommen und in der Mischkammer vereint als Probenfluidstrom gelangt. Der Probenfluidstrom ist Bestandteil eines internen Fluidkreislaufes der Detektionsvorrichtung. Der Probenfluss vom Probeneinlass bis hin zur Detektionsvorrichtung erfolgt über die Mischkammer konvektiv, im Gegensatz zu einem Membraneinlass, bei dem der Probenfluss typisch durch Diffusion über eine trennende Membran erfolgt und im Gegensatz zu einem Direkteinlass, bei welchem keine Vermischung mit einem Fluidstrom in einer Mischkammer erfolgt, sondern die Probe direkt über einen separaten Förderström in die Probenkammer befördert wird. Die außerhalb der Detektionsvorrichtung zugeführte Probe, welche eine zu spezifizierende Substanz in einem Trägerfluid enthält, gelangt in die Mischkammer mit Hilfe eines Ansaugstroms, dem Trägerstrom. Insbesondere bei einem Gasspektrometer wie dem lonenmobilitätsspektrometer ist es vorteilhaft, wenn der angesaugte Probenzufuhrstrom nicht direkt, sondern zuvor mit einem sauberen, trockenen Verdünnungsstrom vermischt, in die Probenkammer der Detektionsvorrichtung gelangt, womit eine höhere Nachweisempfindlichkeit der nachzuweisenden Substanz erreicht wird. In vielen Fällen ist der die Probe führende Ansaugstrom zu groß, um direkt mit der Detektionsvorrichtung untersucht zu werden. Ein großer Ansaugstrom ist hingegen von Vorteil, um zum einen die Probe nicht nur aus der unmittelbaren Umgebung des Probeneinlasses aufzunehmen, sondern auch, um diese möglichst ohne zeitlichen Transportverzug analysieren zu können. Bei Detektionsvorrichtungen mit hoher Nachweisempfindlichkeit wie einem lonenmobilitätsspektrometer kann ein zu hoher Probenförderstrom, welcher aber notwendig ist, um die Probe durch Ansaugen bei hohem Druck bzw. hohem Volumenstrom bereitzustellen, zu unerwünschten Anreicherungen, Ablagerungen oder Kontamination in den Zuführungen und insbesondere in der Probenkammer führen. Ferner ist insbesondere wichtig, dass zwischen Probenfluidstrom und Intensität des auszuwertenden Signals in der Regel eine direkte Abhängigkeit besteht. Das diese Aufgaben erfüllende System umfasst Ausführungsformen und Betriebsweisen zur fluiden Probenzufuhr sowohl im gasförmigen als auch im flüssigen Aggregatzustand. Die hierzu verwendeten Funktionselemente der Fluidik sind, insbesondere für lonenmobilitätsspektrometer, aber auch allgemein für Spektrometer bzw. Detektionsvorrichtungen, zum Nachweis fluider Proben geeignet.

In bevorzugter Ausgestaltung der Erfindung ist vorgesehen, dass das System ferner eine Steuereinheit umfasst, die mit der ersten Fördereinrichtung und/oder mit der zweiten Fördereinrichtung verbunden und dazu eingerichtet ist, eine erste Förderleistung der ersten Fördereinrichtung, und/oder eine zweite Förderleistung der zweiten Fördereinrichtung zu steuern oder zu regeln. Im Allgemeinen werden die konvektiven Zu- und Abflüsse im System, mit anderen Worten am Strömungsvierpol, und im Inneren als stationäre bzw. sich nur langsam ändernde Massenströme angenommen, die sich bevorzugt im Fließgleichgewicht befinden bzw. daraufhin geregelt werden. Durch Veränderung der ersten Förderleistung wird somit ein Volumen- oder Massenstrom des Probenfluidstroms bzw. durch Veränderung der zweiten Förderleistung ein Volumen- oder Massenstrom des Trägerstroms und/oder des Probenzufuhrstroms verändert. Dies ist unabhängig voneinander möglich. Eine Regelung erfolgt vorzugsweise in Abhängigkeit einer Betriebsgröße des Probenfluidstroms, des Trägerstroms und/oder des Probenzufuhrstroms. Mit anderen Worten umfasst das System eine Steuereinheit, die eingerichtet ist, eine Ausgabe zur Steuerung oder Regelung der ersten Förderleistung der ersten Fördereinrichtung und/oder der zweiten Förderleistung der zweiten Fördereinrichtung zu ermitteln und an die erste und/oder zweite Fördereinrichtung auszugeben. Die Ausgabe kann einen Steuerbefehl oder ähnliches umfassen, der die Fördereinrichtung veranlasst, ihre Förderleistung anzupassen oder einzustellen. Die Ströme an der Eingangsseite und der Ausgangseite werden somit durch getrennte Fluidfördermechanismen erzeugt und vorteilhaft auf einen festen Wert kontrolliert geregelt. Hierdurch ist eine verbesserte, kontrollierte Dosierung der Probe in die Detektionsvorrichtung erzielbar, in dem zum Beispiel der Trägerstrom geregelt wird.

In bevorzugter Ausgestaltung der Erfindung ist vorgesehen, dass die Verbindung zwischen der Steuereinheit und einer der gesteuerten oder geregelten Komponente je nach System unterschiedlich gestaltet ist und der Regelung, Überwachung und/oder Kommunikation dient. Vorzugsweise übernimmt die Steuereinheit zentrale Steuerungs- und Regelungsaufgaben, indem sie Signale an die entsprechende Komponente sendet, um deren Betrieb anzupassen oder zu steuern. Dazu zählen Befehle wie Start, Stopp oder Änderungen bestimmter Betriebsparameter. Alternativ ist eine oder sind mehrere der vorliegenden Komponenten auch mit einer separaten, eigenständigen Steuereinheit ausgestattet, die direkt auf spezifische Anforderungen abgestimmt ist. Vorzugsweise meldet die entsprechende Komponente über Sensoren oder andere Erfassungssysteme Daten wie Betriebszustände oder Umgebungsparameter an die Steuereinheit zurück. Diese Informationen ermöglichen eine präzise Überwachung und dynamische Anpassung der Steuerung. **In** komplexeren Systemen, etwa in einem geschlossenen Regelkreis, erfolgt ein kontinuierlicher Abgleich zwischen den aktuellen Betriebsdaten und den Soll-Vorgaben, wodurch eine optimale Funktion sichergestellt wird. Die Kommunikation zwischen Steuereinheit und der entsprechenden Komponente erfolgt also vorzugsweise in beide Richtungen.

Gemäß einer Ausführungsform ist die Betriebsgröße ein vorgegebener Volumen- oder Massenstrom. Der vorgegebene Volumen- oder Massenstrom basiert vorzugsweise auf einem vorgegebenen Verhältnis von Volumen- oder Massenstrom des Probenfluidstroms und Volumen- oder Massenstrom des Probenzufuhrstroms. Alternativ basiert der vorgegebene Volumen- oder Massenstrom auf einem vorgegebenen Verhältnis von Volumen- oder Massenstrom des Verdünnungsstroms und Volumen- oder Massenstrom des Probenzufuhrstroms.

Gemäß einer Ausführungsform ist die Betriebsgröße eine vorgegebene Temperatur des Trägerstroms, des Probenzufuhrstroms und/oder eine Oberflächentemperatur strömungsführender Elemente der Probenzufuhrvorrichtung. Mit anderen Worten erfolgt dann eine Regelung in Abhängigkeit eines, vorzugsweise durch einen Temperatursensor, ermittelten Temperaturwerts. Hierdurch lassen sich Mechanismen wir gezielte Kondensation, Anreicherung oder eine Beeinflussung eines Strömungswiderstand erzielen. Diese Effekte sind von der Temperatur abhängig, sodass sich bei einer festgestellten Temperatur die Mechanismen durch Veränderung der Förderleistung verstärken oder abschwächen lassen. Der einzuregelnde Wert kann somit von der Temperatur je nach Aufgabenstellung eingestellt werden. So kann im Fall einer niedrigen Temperatur zum Zwecke einer gezielten Kondensation oder Probenanreicherung der Trägerstrom erniedrigt werden.

Gemäß einer Ausführungsform ist die Steuereinheit ferner dazu eingerichtet, eine Stellgröße, vorzugsweise eine Drehzahl, der ersten und/oder der zweiten Fördereinrichtung zur Steuerung oder Regelung der Förderleistung zu ermitteln und einzustellen.

Gemäß einer Ausführungsform ist die Steuereinheit dazu eingerichtet, einen momentanen Volumen- oder Massenstrom der entsprechenden Fluidströme, vorzugsweise in Abhängigkeit eines durch einen mit der Steuereinheit verbundenen Drucksensor ermittelten momentanen Druckwerts oder in Abhängigkeit eines durch einen mit der Steuereinheit verbundenen Flow-Controller ermittelten momentanen Durchflusswerts (Flussrate), zu ermitteln. Der erste und der zweite Strömungspfad bzw. Teile derselben besitzen einen festen Strömungswiderstand, welcher zur Messung des Durchflusswerts verwendet werden kann. Der Fluidstrom über den Probenzufuhrstromeinlass bzw. Ausgleichsstromauslass kann direkt durch einen entsprechenden Fluss-Sensor (Flow-Controller) gemessen werden. Mit Hilfe eines zuvor bestimmten Strömungswiderstandes R des ersten und des zweiten Strömungspfads oder eines Teils derselben lassen sich mittels Differenzdruckmessung, z. B. zwischen der Mischkammer und dem Probeneinlass mittels Differenzdrucksensor bzw. zwischen der Mischkammer und dem Probenauslass mittels Differenzdrucksensor diese Fluidströme indirekt messen. Über die gemessenen Massenströme, die wegen den Massenstromerhaltung gleich groß sind, lässt sich mittels der Steuereinheit der gewünschte Massenstrom über die Stellgrößen der zweiten Fördereinrichtung, so z. B. die Drehzahl des Motors einer Pumpe, einstellen und bestimmen welche Menge der Probe in die Mischkammer gelangt. Vorzugsweise wird der Volumenstrom Φ des Probenzufuhrstroms in die Mischkammer indirekt über den Strömungswiderstand R des ersten Strömungspfads oder eines Teils R desselben durch Messung des Differenzdrucks Δp zwischen zwei Punkte des ersten Strömungspfads über Φ = s * Δp mit s=1/R bestimmt, wobei ein Punkt sich in der Mischkammer befinden kann. Da der Ausgleichsstrom betragsmäßig gleich groß ist, kann die Differenzdruckmessung, wenn der Strömungswiderstand des zweiten Strömungspfads nicht viel kleiner als der Strömungswiderstand des ersten Strömungspfads ist, auch über den Strömungswiderstand des zweiten Strömungspfads erfolgen. Dieser gemessen Differenzdruck lässt sich mit der Steuereinheit auswerten und der gewünschte Probenzufuhrstrom bzw. gleichbedeutend der Ausgleichsstrom auf einen gewünschten Wert einregeln.

Gemäß einer Ausführungsform umfasst das System ferner einen Drucksensor zur Erfassung und Ermittlung des Druckwerts, der vorzugsweise ein Differenzdruck ist, eines Fluidstroms der auftretenden Fluidströme (Probenfluidstrom, Verdünnungsstrom, Trägerstrom, Probenzufuhrstrom, Ausgleichsstrom). Das System kann mehrere Drucksensoren umfassen, von denen jeweils einer zur Messung des Druckwerts eines der Fluidströme ausgebildet ist.

Gemäß einer Ausführungsform umfasst das System ferner einen Flow-Controller zur Erfassung und Ermittlung des momentanen Volumen- oder Massenstroms eines Fluidstroms der potenziell auftretenden Fluidströme (Probenfluidstrom, Verdünnungsstrom, Trägerstrom, Probenzufuhrstrom, Ausgleichsstrom). Das System kann mehrere Flow-Controller umfassen, von denen jeweils einer zur Messung des momentanen Volumen- oder Massenstroms eines der Fluidströme ausgebildet ist. Der Flow-Controller ist vorzugsweise ausgebildet, den Durchfluss zu regeln und zu messen, sodass diese Funktion von der Steuereinheit auf den Flow-Controller übertragen wird oder der Flow-Controller die Steuereinheit ist. Über einen eingebauten Sensor wird der tatsächliche Durchfluss gemessen, und das System regelt ihn aktiv, um einen vorgegebenen Sollwert zu erreichen und zu halten. Die voneinander unabhängigen probenzufuhrvorrichtungsseitigen und detektionsvorrichtungsseitigen Fluidströme werden somit durch Fördereinrichtungen für Fluide wie Pumpen aufrechterhalten und vorzugsweise durch Strömungssensoren bzw. Flow-Controller geregelt.

Gemäß einer Ausführungsform umfasst das System ferner einen Temperatursensor zur Erfassung und Ermittlung von der Temperatur eines Fluidstroms der potentiell auftretenden Fluidströme (Probenfluidstrom, Verdünnungsstrom, Trägerstrom, Probenzufuhrstrom, Ausgleichsstrom) und/oder einer Oberflächentemperatur strömungsführender Elemente der Probenzufuhrvorrichtung. Das System kann mehrere Temperatursensoren umfassen, von denen jeweils einer zur Messung des der Temperatur eines der Fluidströme ausgebildet ist.

In bevorzugter Ausgestaltung der Erfindung umfasst das System eine Strömungsteilungsvorrichtung, die ausgebildet ist, den Trägerstrom in einen ersten Trägerteilstrom entlang des ersten Strömungspfads zum Probenzufuhrstromeinlass und einen zweiten Trägerteilstrom entlang eines mit dem ersten und mit dem zweiten Strömungspfad fluidleitend verbundenen dritten Strömungspfads zum Probenauslass aufzuteilen. Mit anderen Worten umfasst das System ferner einen dritten Strömungspfad zur Aufteilung des Trägerstroms in mindestens zwei Trägerteilströme, wobei der dritte Strömungspfad mittels eines ersten Abzweigs fluidleitend mit dem ersten Strömungspfad und mittels eines zweiten Abzweigs fluidleitend mit dem zweiten Strömungspfad verbunden ist. Hierdurch kann der erste Trägerteilstrom entlang des ersten Strömungspfads in Richtung Probenzufuhrstromeinlass strömen und in diesen münden, wohingegen der zweite Trägerteilstrom entlang des dritten Strömungspfads in Richtung des zweiten Strömungspfad strömen und in diesen münden kann. Mit anderen Worten entspricht dann der erste Trägerteilstrom dem Probenzufuhrstrom. Der erste Trägerteilstrom und der zweite Trägerteilstrom vereinigen sich dann wieder vor dem Probenauslass, vorzugsweise im zweiten Strömungspfad. Demnach weist die Strömungsteilungsvorrichtung einen Anfang auf, bei dem die Aufteilung beginnt, und ein Ende, wo die Teilung durch Vereinigung wieder endet. Mit anderen Worten umfasst das System ferner eine Strömungsteilungsvorrichtung, die ausgebildet ist, einen zweiten Trägerteilstrom des Trägerstroms an der Mischkammer vorbei zum Probenauslass zu führen. Mit dem System wird somit ein durch Strömungsteilung definierter, insbesondere während der Datenaufnahme der Detektionsvorrichtung kontinuierlicher, konvektiver Teilstrom des Trägerstroms, nämlich der Probenzufuhrstrom, mit einem separaten Fluidstrom, nämlich dem Verdünnungsstrom, in der Mischkammer vereint. Durch die Strömungsteilung kann durch entsprechende Dimensionierung eines Teilungsverhältnisses eine Überdosierung der Probe vermindert werden. Die Strömungssteilungsvorrichtung ist besonders vorteilhaft, wenn der Probenfluss durch das Ansaugen des Trägerstroms zu einer Überdosierung führen kann. Ist der Probenzufluss mit dem Trägerstrom über den Probeneinlass gering, so ist in einer vereinfachten Ausführungsform keine Strömungsteilungsvorrichtung erforderlich, so dass der Trägerstrom direkt als Probenzufuhrstrom in die Mischkammer gelangen kann. Entweder kann dafür auf die Strömungsteilungsvorrichtung verzichtet werden oder sie ist vorzugsweise aktivierbar und deaktivierbar ausgebildet, beispielsweise indem der Teilungsströmungswiderstand stark erhöht oder der dritte Strömungspfad gänzlich blockiert wird. **In** dieser Ausführung wird für geringe Massen- bzw. Volumenströme eine geeignete zweite Fördereinrichtung wie eine Pumpe benötigt, die, um eine definierte Dosierung zu erreichen, vorzugsweise durch die Steuereinheit geregelt wird.

Gemäß einer weiteren bevorzugten Ausgestaltung der Erfindung, umfasst die Probenzufuhrvorrichtung zumindest einen ergänzenden Strömungswiderstand. Grundsätzlich umfassen alle strömungstechnischen Elemente einen Strömungswiderstand, vorliegend auch als inhärent vorhandener Strömungswiderstand R bezeichnet, der bereits zur Einstellung eines Fluidstroms geeignet ist. Vereinfacht und zur Veranschaulichung dient hier der Schnittpunkt zwischen einer Kennlinie des Strömungswiderstands, welche die funktionale Abhängigkeit Φ = g(Δp) des Volumenstroms Φ von der Druckdifferenz Δp beschreibt, wie beispielsweise die zuvor analog dem Ohmschen Gesetz genannte lineare Abhängigkeit Φ = 1/R * Δp, und einer Kennlinie f der Fördereinrichtung (zum Beispiel einer Pumpenkennlinie), gegeben durch Φ = f(Δp). Die Förderkennlinie f ist im einfachsten Fall ebenfalls eine lineare Beziehung zwischen zwei Punkten, gegeben durch den maximalen Volumenfluss Φₘₐₓ bei Δp = 0 und durch die maximale Druckdifferenz Δpₘₐₓ bei verschwindendem Volumenfluss Φ=0. Der Schnittpunkt beider Kennlinien stellt den Betriebspunkt dar, bei dem die Fördereinrichtung arbeitet. Demzufolge beeinflusst der inhärent vorhandene Strömungswiderstand den Betriebspunkt. Er ermöglicht jedoch nicht eine gewünschte bzw. vorgegebene Einstellung. Diese ist dann nur durch Pumpenregelung und nicht durch externe Vorgaben definiert. Zusätzlich kann ein gesamter Strömungswiderstand der Probenzufuhrvorrichtung also den ergänzenden Strömungswiderstand, vorliegend auch als vordefinierter Strömungswiderstand bezeichnet, umfassen, der sich vom inhärenten vorhandenen Strömungswiderstand dadurch unterscheidet, dass dessen maßgeblicher Zweck die Veränderung des gesamten Strömungswiderstands ist und der durch Gestaltung der Elemente, beispielsweise deren Form und Oberfläche, vorgegeben wird, anders als die anderen zum gesamten Strömungswiderstand beitragenden Elemente wie Leitungen, Filter usw., deren maßgeblicher Zweck zunächst in der Übertragung und Leitung des Fluids zu sehen ist. Mit anderen Worten weist das System durch seine Transportfunktion der Ströme den inhärenten Strömungswiderstand auf, wohingegen der ergänzende Strömungswiderstand ergänzend hinzukommt, sodass sie zusammen den gesamten Strömungswiderstand ausbilden. Vorzugsweise ist der ergänzende Strömungswiderstand zur Einstellung des Volumen- oder Massenstroms des Trägerstroms und/oder des Probenzufuhrstroms ausgebildet.

Der ergänzende Strömungswiderstand, insbesondere dessen strömungsführende Wandungen, ist in einer bevorzugten Ausführung mittels einer Heizvorrichtung auf eine vorgegebene Betriebstemperatur temperierbar. Bekanntlich hängt der Strömungswiderstand nicht nur von der Geometrie, sondern auch von der temperaturabhängigen Dichte und Viskosität des Fluids ab. Höhere Temperaturen befördern durch die erhöhte Diffusion zusätzlich die Vermischung der im Probenträgerstrom enthaltenen Substanzen. Die Heizvorrichtung ist vorzugsweise eine Heizspirale, Heizwendel oder induktive Heizung.

Gemäß einer Ausführungsform umfasst der erste Strömungspfad einen ergänzenden ersten Strömungswiderstand und/oder der zweite Strömungspfad einen ergänzenden zweiten Strömungswiderstand. Insbesondere Strömungsverhältnisse zwischen Probeneinlass und Probenzufuhrstromeinlass sowie Mischkammerstromauslass und Probenauslass sowie der Betriebspunkt der Fördereinrichtung lassen sich so durch die jeweiligen Strömungswiderstände anpassen. Gemäß einer Ausführungsform umfasst der dritte Strömungspfad einen ergänzenden Teilungsströmungswiderstand. Die Probe wird vorzugsweise über die optionale Strömungsteilungsvorrichtung entweder vollständig (der Teilungsströmungswiderstand ist dann im mathematischen Sinne unendlich groß, im praktischen Sinne vorzugsweise zumindest 100-mal größer, insbesondere jedoch 200 mal größer als die Summe aus erstem und zweitem Strömungswiderstand), oder anteilig konvektiv über den Probenzufuhrstromeinlass der Mischkammer und über den Mischkammerstromauslass zur Detektionsvorrichtung sowie in Richtung Probenauslass befördert. Dabei wird der in die Mischkammer gelangte erste Trägerteilstrom (also der Probenzufuhrstrom) mit dem Fluidstrom aus dem Verdünnungsstromeinlass vermischt und als Vereinigungsstrom bzw. Probenfluidstrom zum Mischkammerstromauslass konvektiv befördert. Mit anderen Worten ist eine Kombination aus Strömungsteilungsvorrichtung und erstem und zweitem Strömungswiderstand sowie Teilungsströmungswiderstand besonders vorteilhaft. Hierdurch wird der Probenfluss vom Probeneinlass mittels des ersten Strömungswiderstands und des Teilungsströmungswiderstands in den ersten Trägerteilstrom und den zweiten Trägerteilstrom aufgeteilt. Alternativ kann die Strömungsteilung auch ausgangsseitig mittels des Teilungsströmungswiderstands und des zweiten Strömungswiderstands erfolgen. Gleichfalls ist die Strömungsteilung mit sämtlichen ergänzenden Strömungswiderständen möglich. Die Dimensionierung des Strömungsteilers über diese Strömungswiderstände hängt vom gewünschten anteiligen Probenfluss in die Mischkammer ab. Bei einer festen Wahl der Strömungswiderstände kann der Zufluss von der zweiten Fördereinrichtung in gewissen Grenzen verändert werden.

Gemäß einer Ausführungsform umfasst der ergänzende Strömungswiderstand eine Blende mit definiertem Strömungswiderstand.

In einer weiteren Ausführungsform ist der erste Strömungswiderstand fest dimensioniert und ist ein in der Mischkammer steckbar einsetzbares Rohr, eine steckbar einsetzbare zylindrische Säule oder eine steckbar einsetzbare Kapillare. Der fest dimensionierte erste Strömungswiderstand kann auch eine Strömungsblende mit definiertem Lochinnendurchmesser sein. Diese Strömungsblende kann als Grenzfall des zuvor genannten Rohres mit gegenüber dem Durchmesser kleiner bzw. vernachlässigbarer Länge angesehen werden. Durch die Steckbarkeit des ersten Strömungswiderstandes zur Mischkammer lässt sich eine Anpassung an die Strömungsverhältnisse erreichen. Zur Sicherstellung vergleichbarer Strömungsverhältnisse werden bevorzugt kalibrierte Strömungswiderstände verwendet. Mit der Steckbarkeit und somit Wechselbarkeit wird auch dessen Reinigung erleichtert. Mit anderen Worten können vorzugsweise mehrere dieser festen, nicht notwendig gleichartigen, parallel angeordneten Strömungswiderstände mit dem gesamten ersten Strömungswiderstand vom Probeneinlass über Öffnungen in die Mischkammer führen. Analoge Merkmale gelten für die Ausgangsseite und den zweiten Strömungswiderstand. Insbesondere können diese separaten Strömungswiderstände als Kapillare in Bündeln bzw. Halme in einem zylindrischen Mantel zusammengefasst und eingebettet werden und diesen teilweise oder vollständig ausfüllen. Eine parallele Ausführung kann von Vorteil sein, wenn die optimale Wahl der Strömungswiderstände nicht bekannt ist, da sich die Strömungsverhältnisse je nach Einsatzfall ändern können, jedoch eine feste Auswahl mit der Mischkammer verbundener, kalibrierter Strömungswiderstände zur Verfügung steht, ohne ein gesamtes Einlasssystem auszuwechseln. Bevorzugt wird eine auf Grundlage eines Basisströmungswiderstands gestaffelt bzw. codierte Auswahl, z. B. nach dem Binärzahlensystem getroffen, was die Anzahl der nötigen Kombinationen reduziert. Je nach Einsatzweck können diese Strömungswiderstände aktiviert oder deaktiviert werden, in dem die parallelen Öffnungen mechanisch durch Verschlüsse wie Zylinder oder Konusse vollständig geschlossen oder geöffnet werden.

Gemäß einer Ausgestaltung ist ein in die Mischkammer führender erster Abschnitt des ersten Strömungspfads, der den ersten Trägerteilstrom führt, ein Rohr, eine Kapillare oder eine Düse. Zudem kann der erste Abschnitt auch spiralig gewunden ausgebildet sein, wobei bekanntermaßen Innendurchmesser und Kanallänge sowie dynamische Viskosität den zugehörigen Strömungswiderstand bestimmen, der sich aus den Navier-Stokes-Gleichungen bestimmen lässt. Bei einer laminaren Rohrströmungen mit gegenüber dem Rohrradius großen Rohrlängen nimmt der Strömungswiderstand nach dem Gesetz von Hagen-Poiseuille reziprok mit der vierten Potenz des Rohrradius zu und kann hiermit direkt berechnet werden. Der dritte Strömungspfad in Richtung des Probenauslasses besitzt ebenfalls einen zugehörigen Strömungswiderstand. Die Strömungswiderstände können mittels der Finite-Elemente-Methode durch Simulation bestimmt werden. Allgemein ist durch die Simulation eine anwendungsorientierte Dimensionierung der Strömungsteilungsvorrichtung möglich, die an die Strömungsverhältnisse beim Ansaugen der Probe angepasst werden kann.

Gemäß einer Ausführungsform bilden der Probenzufuhrstromeinlass und/oder der Ausgleichsstromauslass zumindest einen Teil des ergänzenden Strömungswiderstands, vorzugsweise des ersten und/oder des zweiten Strömungswiderstands, aus.

Gemäß einer Ausführungsform ist der erste Strömungswiderstand nach der Strömungsteilungsvorrichtung angeordnet. Mit anderen Worten ist der erste Strömungswiderstand stromabwärts der Strömungsteilungsvorrichtung und stromaufwärts des Probenzufuhrstromeinlasses bezogen auf eine Strömungsrichtung des Trägerstroms bzw. zwischen dem ersten Abzweig und dem Probenzufuhrstromeinlass, also nach erfolgter Strömungsteilung, angeordnet. Demnach umfasst der erste Abschnitt den ersten Strömungswiderstand

Gemäß einer Ausführungsform ist der zweite Strömungswiderstand vor einem Ende der Strömungsteilungsvorrichtung angeordnet. Mit anderen Worten ist der zweite Strömungswiderstand stromaufwärts einer fluidleitenden Verbindung zwischen zweitem Strömungspfad und drittem Strömungspfad und stromabwärts des Ausgleichsstromauslasses bezogen auf eine Strömungsrichtung des Trägerstroms bzw. zwischen dem Ausgleichsstromauslass und dem zweiten Abzweig, also vor Vereinigung von erstem und zweitem Trägerteilstrom, angeordnet. Mit anderen Worten umfasst der zweite Strömungspfad einen zweiten Abschnitt, der den Ausgleichsstrom führt, wobei der zweite Abschnitt den zweiten Strömungswiderstand umfasst.

Gemäß einer Ausgestaltung der Erfindung ist der ergänzende Strömungswiderstand stufenförmig oder kontinuierlich einstellbar. Vorzugsweise sind der erste und/oder der zweite Strömungswiderstand und/oder ist der Teilungsströmungswiderstand stufenförmig oder kontinuierlich einstellbar. Da der Strömungswiderstand unter anderem abhängig von Strömungsverhältnissen ist, können zum Vergleich und Einordnung der Strömungswiderstände entweder Betrachtungen bei gleichen Bedingungen vorgenommen werden, um den Strömungswiderstand wie oben beschrieben zu bestimmen, oder es wird bezüglich des Strömungswiderstands ausschließlich auf die Rohrreibungszahl (beispielsweise bei Leitungen) oder den Widerstandsbeiwert (beispielsweise bei umströmten Körpern) abgestellt. Die Rohrreibungszahl (auch Rohrreibungsbeiwert) λ ist eine dimensionslose Kennzahl zur Berechnung des Druckabfalls einer Strömung aufgrund des Strömungswiderstands in einem Rohr. Der dimensionslose Widerstandsbeiwert beschreibt, wie stark das Bauteil den Fluss hemmt, basierend auf seiner Geometrie. Er ist nützlich, um Strömungswiderstände verschiedener Bauteile zu vergleichen und wird oft in der Strömungsmechanik verwendet. Das Verhältnis mehrerer Strömungswiderstände beeinflusst die Strömungsteilung. Ist z. B. der Teilungsströmungswiderstand viel kleiner gegenüber dem ersten Strömungswiderstand, mindestens jedoch 10mal kleiner, wird die Strömungsteilung wesentlich durch das Verhältnis von erstem Strömungswiderstand zu Teilungsströmungswiderstand bestimmt. Mit der Änderung des Strömungswiderstandes kann die Dosiermenge der Probe und damit die Signalintensität des auszuwertenden Spektrums angepasst werden.

Gemäß einer Ausführungsform ist der ergänzende Strömungswiderstand manuell oder automatisiert einstellbar.

Gemäß einer Ausführungsform ist der ergänzende Strömungswiderstand durch einen Stellmechanismus einstellbar. Der Stellmechanismus ist vorzugsweise eine Vorrichtung zur Veränderung eines Strömungsquerschnitts oder auch durchströmten Querschnitts, zur Aktivierung und Deaktivierung von Strömungshindernissen, zur Ausrichtung von Strömungshindernissen, zur Veränderung der Temperatur von strömungsführenden Teilen des ergänzenden Strömungswiderstands oder ein Austauschmechanismus zum Einsatz verschiedener lösbar, insbesondere in einen der entsprechenden Strömungspfade, eingesetzter Widerstände. Mit anderen Worten umfasst das System ferner zumindest einen mit dem ergänzenden Strömungswiderstand verbundenen Stellmechanismus (Stellglied oder Aktor) zur Veränderung des ergänzenden Strömungswiderstands.

Gemäß einer Ausführungsform umfasst der Stellmechanismus eine Drosselklappe, einen Schieber, ein Ventil oder ähnliches.

Gemäß einer Ausführungsform umfasst der ergänzende Strömungswiderstand eine Vielzahl paralleler kalibrierter Strömungswiderstände, die mittels des Stellmechanismus selektiv aktivierbar und deaktivierbar sind.

Gemäß einer Ausführungsform ist der ergänzende Strömungswiderstand - ähnlich einem Ventil - veränderlich ausgeführt. Der erste und/oder zweite Strömungswiderstand sind vorzugsweise zylindrische bzw. konische Führungen, in welche in einer Ausführungsform bewegliche Teile als zylindrische Stifte, Nadeln bzw. Konusse mit einem verbleibenden Fluidspalt, nichtdichtend eingeführt werden können, deren Querschnitt und bevorzugt die eingetauchte Länge bzw. die Eindringtiefe den Strömungswiderstand veränderlich macht. Der entsprechende Fluidspalt, durch welchen der Fluidstrom einstellbar fließen kann, ist mit dem Probenzufuhrstromeinlass bzw. dem Ausgleichsstromauslass der Mischkammer verbunden. Die mechanische Einstellbarkeit wird vorzugsweise durch Justierschrauben erreicht, die sich vorteilhaft in Gewinden außerhalb in einer die Probenzufuhrvorrichtung umschließenden Wand zugänglich befinden können. Die beweglichen Teile solcher variabler Strömungswiderstände sind bevorzugt auch schraubenförmige Geometrien wie Spiralen, aber auch Filter wie ein Partikelfilter mit definierter Permeation. Eine Reihenschaltung fester und variabler Strömungswiderstände ist bevorzugt, z. B. als Staffelung von beweglichen Zylindern bzw. Konussen, die je nach Eindringtiefe in obengenannte Führung wirksam werden. Zudem besteht die Möglichkeit, dass ein Teil des ergänzenden Strömungswiderstandes, z. B. ein Teilabschnitt des in Mischkammer führenden Strömungskanals fest ist, und ein anschließender Teil variabel ist.

Vorzugsweise ist der ergänzende Strömungswiderstand durch die mit dem Stellmechanismus verbundene Steuereinheit automatisiert einstellbar. Bevorzugt ist die Steuereinheit dazu eingerichtet, den ergänzenden Strömungswiderstand zu steuern oder, vorzugsweise in Abhängigkeit einer Betriebsgröße des Probenfluidstroms, des Trägerstroms und/oder des Probenzufuhrstroms, zu regeln. Mit anderen Worten ist die Steuereinheit dazu eingerichtet, eine Stellgröße des ergänzenden Strömungswiderstands zu steuern oder, vorzugsweise in Abhängigkeit von mindestens einer Betriebsgröße des Trägerstroms und/oder des Probenzufuhrstroms, zu regeln. Dabei ist die Stellgröße insbesondere ein Strömungsquerschnitt oder auch durchströmter Querschnitt, eine Aktivierung und Deaktivierung von Strömungshindernissen, eine Ausrichtung von Strömungshindernissen, eine Veränderung der Temperatur von strömungsführenden Teilen des ergänzenden Strömungswiderstands oder ein Austauschmechanismus zum Einsatz verschiedener lösbar, insbesondere in einen der entsprechenden Strömungspfade, eingesetzter Widerstände. Mit anderen Worten ist die Steuereinheit dazu eingerichtet, die Stellgröße mittels des Stellmechanismus einzustellen.

Gemäß einer Ausführungsform ist die Betriebsgröße ein vorgegebener Volumen- oder Massenstrom. Der vorgegebene Volumen- oder Massenstrom basiert vorzugsweise auf einem vorgegebenen Verhältnis von Volumen- oder Massenstrom des Probenfluidstroms und Volumen- oder Massenstrom des Probenzufuhrstroms. Alternativ basiert der vorgegebene Volumen- oder Massenstrom auf einem vorgegebenen Verhältnis von Volumen- oder Massenstrom des Verdünnungsstroms und Volumen- oder Massenstrom des Probenzufuhrstroms.

Gemäß einer Ausführungsform ist die Betriebsgröße eine vorgegebene Temperatur des Trägerstroms, des Probenzufuhrstroms und/oder eine Oberflächentemperatur strömungsführender Elemente. Mit anderen Worten erfolgt dann eine Regelung in Abhängigkeit eines, vorzugsweise durch einen Temperatursensor, ermittelten Temperaturwerts.

Gemäß einer Ausführungsform umfasst das System ferner eine Antriebseinheit zur Betätigung des Stellmechanismus (des Stellglieds oder des Aktors), die mit der Steuereinheit verbunden ist. Mit anderen Worten ist die Steuereinheit dazu eingerichtet, eine Ausgabe zur Steuerung oder Regelung in Abhängigkeit einer Betriebsgröße des Trägerstroms und/oder des Probenzufuhrstroms des ergänzenden Strömungswiderstands zu ermitteln und an die Antriebseinheit auszugeben.

Besonders bevorzugt wird die zuvor beschriebene Einstellbarkeit des beweglichen Teils des ergänzenden Strömungswiderstands über insbesondere elektro-mechanische Aktoren bzw. Aktuatoren durch Positionierungen mittels der Steuereinheit verändert und überwacht. Der Aktor ist mit dem beweglichen Teil des Strömungswiderstandes verbunden, z. B. mit den zuvor genannten Stiften, Nadeln oder Konussen. Als Aktoren können Hebel verwendet werden, die sich mittels elektromechanischer Relais (s. Nadeldrucker) oder durch thermische Verformung mittels Bimetalle bewegen lassen. Bimetall-Hebel können die Probenzufuhr in Abhängigkeit von einer Zieltemperatur der in die Mischkammer führenden Strömungswiderstände regeln und insbesondere die Zufuhr bei zu niedriger Temperatur sperren. Mit den Aktoren ist sowohl eine stufige als auch eine kontinuierliche Einstellung des Strömungswiderstandes möglich und es können voreinstellbare und auch an die Probendosierung bzw. am analysierten Spektrum angepasste Veränderungen über ein von der Steuereinheit überwachtes Programm vorgenommen werden. In Verbindung mit der Probenauswertung kann der Probenzufluss in die Mischkammer über Änderung des ergänzenden Strömungswiderstands und damit der Mischanteil in die Detektionsvorrichtung kontrolliert vorgenommen oder mit einem Konus als Stöpsel gesperrt werden, so dass eine Überdosierung bzw. Kontamination (Schwallschutz) vermieden werden kann. Ein Spezialfall ist das vollständige Verschließen des Probenzufuhrstromeinlasses und des Ausgleichsstromauslasses. Die kontrollierte, variable Anpassung des ergänzenden Strömungswiderstands ist ein Vorteil gegenüber einem Membraneinlasssystem, weil sich der Durchlass durch eine fest eingebaute Membran nicht einfach ändern lässt oder etwa eine aufwendig partielle Abdeckung der Membranoberfläche, z. B. mittels einer (einstellbaren) Blende, erfordern würde.

Im Fall der zuvor genannten parallelen bzw. gestaffelten, festen Strömungswiderstände ist die Steuereinheit vorzugsweise ausgebildet, digital eine programmierbare, insbesondere codierte Auswahl der voneinander unabhängigen, zu öffnenden und zu schließenden Zuführungen zur Mischkammer mittels Aktoren zu steuern, sodass eine Anpassung der Dosierung an die Gesamtprobenströmung erfolgen kann.

Gemäß einer Ausführung umfasst die Probenzufuhrvorrichtung einen Differenzdrucksensor, welcher den Druckunterschied zwischen der Mischkammer und der Umgebung des Systems erfasst, wobei die Steuereinheit eingerichtet ist, mittels eines Aktors in Abhängigkeit von Druckänderungen, z. B. infolge von Höhenänderungen der Detektionsvorrichtung, den Probenzufuhrstrom zur Mischkammer zu drosseln oder gänzlich zu sperren. Ein solche Sperrung ist auch vorteilhaft, wenn die Detektionsvorrichtung eine etwa mittels Zeitreihenanalyse prognostizierte Überdosierung durch Auswertung eines Detektorsignals mittels der Steuereinheit oder anderer Hilfssensoren detektiert.

Gemäß einer weiteren bevorzugten Ausführung umfasst die Probenzufuhrvorrichtung einen Motor, der ausgebildet ist, den beweglichen Teil des ergänzenden Strömungswiderstands in den Kanal schrittweise über ein Getriebe ein- bzw. auszuführen. In einer miniaturisierten Ausführung kann die mechanische Änderung der Strömungswiderstände durch mikroelektromechanische Systemelemente (MEMS-Elemente) realisiert werden.

Gemäß einer Ausführungsform ist die Steuereinheit ferner dazu eingerichtet, einen, vorzugsweise mittels Sensoren erfassten, physikalischen Zustand des ergänzenden Strömungswiderstands zu ermitteln und die Probe neben gemessener Werte am Detektor bzw. Spektren zusätzlich anhand des physikalischen Zustands zu analysieren, beispielsweise durch statistische Verfahren oder durch Mustererkennung. Die Sensoren umfassen vorzugsweise einen Temperatur- und Drucksensor und optional einen Feuchtesensor.

In bevorzugter Ausgestaltung der Erfindung ist vorgesehen, dass das System ferner eine Anreicherungsvorrichtung zur Anreicherung der Probe im Probenfluidstrom, Trägerstrom und/oder Probenzufuhrstrom umfasst.

In weiterer bevorzugter Ausgestaltung der Erfindung ist vorgesehen, dass das System ferner eine Homogenisierungsvorrichtung zur Vermischung der Probe im Probenfluidstrom, Trägerstrom und/oder Probenzufuhrstrom und/oder zur Kondensationsminderung der Probe im Trägerstrom, im Probenzufuhrstrom, und/oder im Probenfluidstrom umfasst. Mit anderen Worten ist die Homogenisierungsvorrichtung ausgebildet, Kondensation oder Phasentrennung im Fluid zu verhindern oder zumindest zu verringern und eine Vermischung zu verstärken.

Gemäß einer bevorzugten Ausgestaltung der Erfindung ist die Steuereinheit ferner dazu eingerichtet, eine Funktion der Anreicherungsvorrichtung und/oder der Homogenisierungsvorrichtung zu aktivieren und zu deaktivieren.

Vorzugsweise ist die Steuereinheit dazu eingerichtet, eine Anreicherungsleistung der Anreicherungsvorrichtung, und/oder eine Homogenisierungsleistung der Homogenisierungsvorrichtung zu steuern oder in Abhängigkeit einer Betriebsgröße des Probenfluidstroms, des Trägerstroms und/oder des Probenzufuhrstroms zu regeln. Die Anreicherungsleistung bezieht sich auf die Fähigkeit des Systems, bestimmte Substanzen aus einer Mischung oder Umgebung, vorliegend die Probe, selektiv zu konzentrieren (anzureichern). Die Anreicherungsleistung ist ein Maß dafür, wie gut ein Verfahren oder Material in der Lage ist, eine Substanz (oft in geringen Konzentrationen vorhanden) auf eine höhere Konzentration zu bringen. Die Anreicherungsleistung kann durch einen Anreicherungsfaktor quantifiziert werden, der durch das Verhältnis von Konzentration der Substanz nach Anreicherung zu Konzentration der Substanz vor Anreicherung bestimmt ist. Die Homogenisierungsleistung beschreibt die Fähigkeit des Systems, eine gleichmäßige Verteilung von Bestandteilen, vorliegend der Probe, innerhalb einer Mischung zu erzeugen. Ziel ist es, Unterschiede in der Zusammensetzung, Konsistenz oder Struktur innerhalb eines Materials zu minimieren oder vollständig aufzuheben. Die Homogenisierungsleistung ist ein Maß für die Effizienz, mit der ein Prozess oder ein Gerät heterogene Komponenten in eine homogene Mischung umwandeln kann. Die Homogenisierungsleistung im Zusammenhang mit der Verhinderung von Kondensation und der gleichmäßigen Verteilung der Probe in dem Fluidstrom beschreibt die Fähigkeit des Systems, die Fluidphase stabil und gleichmäßig verteilt zu halten. Dies ist entscheidend, um eine genaue Analyse und eine konsistente Probenahme zu gewährleisten. Bei Gasproben mit flüchtigen Bestandteilen kann es zu Kondensation kommen, wenn das Gas abkühlt oder Druckschwankungen auftreten. Kondensation führt zu einer ungleichmäßigen Verteilung der Bestandteile im Fluidstrom und kann die Analyse verfälschen. Ohne ausreichende Homogenisierung können Bestandteile der Probe nicht gleichmäßig im Fluidstrom verteilt sein, was zu Messfehlern oder unrepräsentativen Ergebnissen führt. Die Homogenisierungsleistung gewährleistet, dass alle Bestandteile des Fluids gleichmäßig im Fluidstrom verteilt sind, um eine präzise Probenahme oder Analyse zu ermöglichen. Die Homogenisierungsleistung lässt sich anhand verschiedener Parameter oder einer Kombination dieser Parameter bewerten. Ein zentraler Faktor ist der Homogenitätsgrad, der die Gleichmäßigkeit der Verteilung beschreibt und mathematisch über die Standardabweichung der Konzentrationen relativ zur Durchschnittskonzentration durch H=1-x/σ ermittelt wird, mit der Standardabweichung der Konzentrationen an verschiedenen Stellen im Fluidstrom σ sowie der durchschnittlichen Konzentration x. Eine nahezu perfekte Homogenisierung wird durch Werte nahe 1 ausgedrückt. Vorzugsweise soll der Wert größer 0,7 und besonders bevorzugt größer 0,9 sein. Zur Verhinderung von Kondensation spielt die Temperaturstabilität ΔT eine entscheidende Rolle. Schwankungen in der Temperatur sollten minimal sein, vorzugsweise unter 1 °C über die Länge eines betrachteten Abschnitts der Probenzufuhrvorrichtung, der die Homogenisierungsvorrichtung enthält, um die Fluidphase stabil zu halten. Ebenso wichtig ist die Druckstabilität Δp, da Druckschwankungen Kondensation begünstigen können. Diese sollten 1 % des Systemdrucks nicht überschreiten. Ein weiteres Kriterium ist die Strömungsgeschwindigkeit, die optimalerweise im Bereich des laminaren Flusses liegt (Reynolds-Zahl < 2300), um Turbulenzen und Totzonen zu vermeiden, die eine ungleichmäßige Verteilung fördern könnten. In der Anwendung können diese Parameter durch Simulationen, wie z. B. Strömungsdynamik (CFD), modelliert und experimentell mit Sensoren entlang des Systems validiert werden. Diese Bewertungen helfen dabei, das System zu optimieren. Die Kombination dieser Parameter ermöglicht eine präzise Beurteilung und Anpassung der Homogenisierungsleistung, die für genaue Analysen und stabile Probenahmebedingungen essenziell ist.

Gemäß einer Ausführungsform umfasst die Homogenisierungsvorrichtung eine Heizvorrichtung zur Temperierung zumindest eines des Probenfluidstroms, des Trägerstroms und/oder des Probenzufuhrstroms und/oder umfasst die Homogenisierungsvorrichtung einen Mischer. Das System sorgt hierdurch vorzugsweise dafür, dass die Temperatur des Fluids konstant bleibt, sodass flüssige Bestandteile in der Fluidphase verbleiben. Beheizte Leitungen oder Komponenten halten die Temperatur bei Gasen über dem Kondensationspunkt, um Kondensation zu verhindern. Der Einsatz von einer Heizvorrichtung ermöglicht es, stabile Bedingungen zu schaffen. Mischung und Verteilung wird vorzugsweise durch Verwirbler oder Diffusoren erzielt. Diese fördern die gleichmäßige Verteilung der Fluidbestandteile im Fluidstrom. Der Mischer ist vorzugsweise ein Laminar-Mixer wie ein statischer Mischer oder ein Wendelmischer, die mechanische und strömungsdynamische Prozesse kombinieren, um eine homogene Mischung zu erzeugen. Besonders vorteilhaft ist eine Kombination aus Heizvorrichtung, die sowohl als Widerstandsheizung als auch als induktive Heizung ausgeführt werden kann, und Mischer, durch die das diffusive Vermischen im Mischer mit einer Heizvorrichtung befördert wird. Die Heizvorrichtung ist vorzugsweise eine Heizspirale, Heizwendel oder induktive Heizung.

Vorzugsweise umfasst der Mischer selbst die Heizvorrichtung. Demnach kann er durch formgebende Heizelemente ausgebildet sein, sodass er beide Funktionalitäten in sich vereint.

Gemäß einer Ausführungsform umfasst die Anreicherungsvorrichtung eine Kühlvorrichtung zur Temperierung des Probenfluidstroms, des Trägerstroms und/oder des Probenzufuhrstroms.

Vorzugsweise umfasst die Anreicherungsvorrichtung Elemente, die von zumindest einem des Probenfluidstroms, des Trägerstroms und/oder des Probenzufuhrstroms durchströmt sind, die eine überströmte Oberfläche vergrößern. Eine solche Vergrößerung der Oberfläche kann zum Beispiel durch Aufteilung des ersten Strömungspfades durch mehrere parallele Verbindungen, Kanäle oder Kapillaren erfolgen. Sie kann aber auch mittels poröser Körper bekannter Permeabilität realisiert werden.

Gemäß einer Ausführungsform umfasst die Probenzufuhrvorrichtung und/oder die Mischkammer die Homogenisierungsvorrichtung und/oder die Anreicherungsvorrichtung. Vorzugsweise umfasst die Probenzufuhrvorrichtung und/oder die Mischkammer die Heizvorrichtung und/oder die Kühlvorrichtung. Die Mischkammer selbst kann durch diese oder zusätzlich beheizt werden, um Ablagerungen und Kondensation zu vermeiden. Der Probeneinlass kann mit der Heizvorrichtung beheizt werden, um Ablagerungen oder Kondensation auf der Oberfläche zu verhindern oder zu beseitigen. Dazu besitzt er zudem vorzugsweise eine hohe Wärmeleitfähigkeit. **In** einer weiteren bevorzugten Ausführung ist der Probeneinlass bzw. der Probenzufuhrstromeinlass mit einer Kühlvorrichtung wie einem Peltier-Element zum Zwecke der Anreicherung bzw. der Kondensation oder Abscheidung gasförmiger Probendämpfe wie Wasserdampf, ätherische Öle, Destillate, Extrakte, Aerosole über eine Wärmebrücke verbunden. Über diese Wärmebrücke lässt sich der Probeneinlass bzw. der Probenzufuhrstromeinlass vorzugsweise sowohl heizen als auch kühlen. Die Innenoberfläche von Wänden der Probenzufuhrvorrichtung, die mit der Probe in Kontakt kommt, soll bevorzugt glatt sein, d. h. eine geringe effektive Oberfläche besitzen. Durch die Kühlvorrichtung ist es möglich, den gegensätzlichen Effekt der Ablagerung bzw. Kondensation zum Zwecke der Anreicherung der Probe zu befördern. Diese lässt sich unabhängig in einem anderen Verfahrensschritt durch Heizen mittels der Heizvorrichtung desorbieren.

Bevorzugt umfasst der erste Strömungspfad die Homogenisierungsvorrichtung und/oder die Anreicherungsvorrichtung.

Gemäß einer Ausführungsform umfasst die Detektionsvorrichtung die Homogenisierungsvorrichtung und/oder die Anreicherungsvorrichtung. Vorzugsweise umfasst die Detektionsvorrichtung die Heizvorrichtung und/oder die Kühlvorrichtung.

Gemäß einer Ausführungsform umfasst die Detektionsvorrichtung einen Mischer, der zwischen Mischkammerstromauslass und Probenfluideinlass angeordnet und mit diesen jeweils fluidleitend verbunden ist. Der Mischer ist vorzugsweise ein statischer Mischer. Zur Verbesserung der Vermischung des Probenfluidstroms, lässt sich hierdurch der Diffusionsweg beim Austritt aus der Mischkammer über den Mischkammerstromauslass mit einem statischen Mischer, vorzugsweise in der Ausführungsform als Spirale oder Schraube (z. B. archimedische Schraube, ähnlich einer Holzschraube oder Gewindeschraube) innerhalb eines kleinen Volumens verlängern, womit mehr Zeit zur Vermischung zur Verfügung steht. Der statische Mischer in Kombination mit der Heizvorrichtung lässt sich mit dieser direkt oder über eine Wärmebrücke verbinden und ist besonders vorteilhaft selbst die Heizvorrichtung, die wie zuvor genannt sowohl als Widerstandsheizung als auch als induktive Heizung ausgeführt werden kann. Die Temperatur des Probenfluidstroms wird vorteilhaft mit einem Temperatursensor gemessen und mit der Steuereinheit den Anforderungen angepasst und überwacht. Durch die damit einstell- und kontrollierbaren höheren Temperaturen lässt sich aufgrund der Temperaturabhängigkeit der Diffusionskoeffizienten sowohl des Verdünnungsstroms als auch des Probenfluidstroms eine Optimierung der diffusiven Vermischung erreichen. Durch den verlängerten Weg, insbesondere bei einer spiralförmigen Ausführung des statischen Mischers, ist auch im Mischkammerstromauslass ein Anreichern von unvermischten Probenmolekülen auf der Oberfläche des Mischers möglich. Um diesen Akkumulationseffekt zu erhöhen, ist in einer weiteren Ausführungsform der statische Mischer über ein Wärmebrücke mit der Kühlvorrichtung wie einem Peltier-Element verbunden. Ist die auf der Oberfläche akkumulierte Menge nach einer vorgegebenen Zeit erreicht, kann diese durch die Heizvorrichtung erhitzt werden und damit die akkumulierten Probenmoleküle freigesetzt werden.

Vorzugsweise ist der ergänzende Strömungswiderstand bzw. dessen Wandungen mittels der Heizvorrichtung beheizbar und/oder mittels der Kühlvorrichtung kühlbar.

Bevorzugt umfasst der erste Strömungspfad einen spiralförmigen oder helikalen Leitungsabschnitt. Mit anderen Worten ist innerhalb des ersten Strömungspfads ein spiralförmiges oder helikales fluidleitendes Element angeordnet. Dies dient der Anreicherung fluider Substanzen oder von Partikeln - insbesondere in Kombination mit der Heiz- und/oder Kühlvorrichtung - mit hohem Dampfdruck bei niedrigen Temperaturen, die bei höheren Temperaturen desorbiert werden können. In speziellen Anwendungen ist die Vergrößerung der Oberfläche - insbesondere des optionalen ersten Strömungswiderstandes - des ersten Strömungspfads in die Mischkammer von Vorteil, insbesondere des in die Öffnung führenden Abschnitts der Strömungsteilungsvorrichtung. Damit ist es möglich, flüssige Bestandteile wie Tropfen in einer gasförmigen Probe, welche aus der Umgebung z. B. als Aerosole direkt eingebracht werden oder durch Kondensation aus einem Desorber oder Verdampfer im Probeneinlass entstehen können, vor dem Eintritt in die Mischkammer durch Heizen mittels der Heizvorrichtung in den gewünschten gasförmigen Aggregatzustand umzuwandeln. Das Element ist mit anderen Worten ein Einsatz einer spiralartigen Geometrie wie einer Schraube oder Wendel, z. B. als Feder auf einer mittigen Führungsachse, welche den Innenraum des führenden Strömungspfads völlig oder teilweise ausfüllt und darüber hinaus den Strömungswiderstand seriell durch Verlängerung des Weges vergrößert. Der in die Mischkammer führende erste Strömungspfad oder ein Teil dessen ist vorzugsweise selbst als spiralförmige Rohrgeometrie bzw. Kapillare wegverlängernd und oberflächenvergrößernd ausgeführt. Diese Modifizierungen der Innenoberfläche in Hinsicht der Vergrößerung des Strömungswiderstandes kann auch dazu genutzt werden, um größere Partikel vom Transfer in die Mischkammer abzuscheiden und praktisch als Filter insbesondere für feste Partikel zu dienen. Als Einsatz in den strömungsführenden Kanal in die Mischkammer ist dieser vorzugsweise wechselbar ausgebildet und kann damit ausgetauscht bzw. gereinigt werden.

Gemäß einer Ausführungsform ist die Steuereinheit mit der Heizvorrichtung und/oder der Kühlvorrichtung verbunden und dazu eingerichtet, eine Heizleistung und/oder eine Kühlleistung zu steuern oder in Abhängigkeit von mindestens einer Betriebsgröße des Probenfluidstroms, des Trägerstroms und/oder des Probenzufuhrstroms bzw. strömungsführender Elemente zu regeln. Um Ablagerungen, Kondensationen bzw. Kontaminationen gänzlich zu vermeiden, etwa an Innenkanten oder Biegungen mit wenig Strömung in denen sich das Fluid staut, werden solche Oberflächen zusätzlich beheizt. Eine dafür vorgesehene mit der Steuereinheit geregelte Heizvorrichtung in Verbindung mit einem Temperatursensor für den ersten Strömungspfad erfüllt diese Aufgabe. Dabei ist es von Vorteil, wenn der erste Strömungspfad selbst eine hohe Wärmeleitfähigkeit und geringe Wärmekapazität besitzt, wie eine dünnwandige metallische Kapillare, die mit einer hitzebeständigen und wärmeisolierenden Trennwand als Halterung z. B. aus Edelstahl oder einem Kunststoff wie Teflon verbunden ist. Somit kann mit geringer Verzögerung die erforderliche Temperatur eingestellt und mit einem niedrigen energetischen Aufwand aufrechterhalten werden. Zudem lässt sich der erste Strömungspfad zur Reinigung bei erhöhter Temperatur separat schneller aufheizen. In der Ausführungsform mit der Strömungsteilungsvorrichtung ist es aus energetischen Gründen vorteilhaft, nur den in die Mischkammer führenden ersten Abschnitt mittels der Heizvorrichtung zu heizen, wohingegen der dritte Strömungspfad wärmeisolierend ist. Die Wärmezufuhr erfolgt vorzugsweise direkt, oder indirekt z. B. über eine Wärmebrücke, resistiv mit eine Widerstandswicklung oder induktiv mittels einer Spule.

Vorzugsweise ist die Betriebsgröße ein Massenanteil oder Stoffmengenanteil der Probe in einem entsprechenden Fluidstrom. Mit anderen Worten werden die physikalischen Größen wie Konzentration, Temperatur, Druck und/oder Strömungsgeschwindigkeit überwacht und aktiv beeinflusst, um eine homogene Verteilung oder gezielte Anreicherung zu gewährleisten.

Gemäß einer Ausführungsform ist die Betriebsgröße ein vorgegebener Volumen- oder Massenstrom. Der vorgegebene Volumen- oder Massenstrom basiert vorzugsweise auf einem vorgegebenen Verhältnis von Volumen- oder Massenstrom des Probenfluidstroms und Volumen- oder Massenstrom des Probenzufuhrstroms. Alternativ basiert der vorgegebene Volumen- oder Massenstrom auf einem vorgegebenen Verhältnis von Volumen- oder Massenstrom des Verdünnungsstroms und Volumen- oder Massenstrom des Probenzufuhrstroms.

Gemäß einer Ausführungsform ist die Betriebsgröße eine vorgegebene Temperatur des Trägerstroms, des Probenzufuhrstroms und/oder eine Oberflächentemperatur strömungsführender Elemente. Mit anderen Worten erfolgt dann eine Regelung in Abhängigkeit eines, vorzugsweise durch einen Temperatursensor, ermittelten Temperaturwerts.

Gemäß einer Ausführungsform ist die Steuereinheit dazu eingerichtet, eine Stellgröße der Heizvorrichtung und/oder der Kühlvorrichtung zur Steuerung oder Regelung der Heizleistung und/oder Kühlleistung zu ermitteln und einzustellen. Eine Stellgröße ist beispielsweise die zugeführte elektrische Leistung, sofern die Vorrichtung elektrisch betrieben wird.

Vorzugsweise umfasst das System ferner einen Temperatursensor zur Erfassung der entsprechenden Temperaturen der Fluidströme oder der Oberflächentemperatur strömungsführender Elemente. Bevorzugt wird somit die Heiztemperatur mit Hilfe des Temperatursensor auf eine Zieltemperatur mit der Steuereinheit geregelt. Bei gasförmigen Fluiden lässt sich dann der Sättigungsdampfdruck und folglich das Verdampfen kontrollieren. Mit der Heizvorrichtung lassen sich auch unerwünschte Ablagerungen entfernen.

Gemäß einer bevorzugten Ausgestaltung der Erfindung umfasst die Homogenisierungsvorrichtung und/oder die Anreicherungsvorrichtung den ergänzenden Strömungswiderstand oder einen Teil des ergänzenden Strömungswiderstands. Mit anderen Worten bildet die Homogenisierungsvorrichtung und/oder die Anreicherungsvorrichtung den ergänzenden Strömungswiderstand oder den Teil des ergänzenden Strömungswiderstands aus. Dies kann beispielsweise durch die Heizvorrichtung und/oder den Mischer im Falle der Homogenisierungsvorrichtung erfolgen. Ein Verbund der Komponenten der Homogenisierungsvorrichtung bildet demnach den ergänzenden Strömungswiderstand oder den Teil des ergänzenden Strömungswiderstands. Im Falle der Anreicherungsvorrichtung kann dies beispielsweise durch die Kühlvorrichtung erfolgen. Ein Verbund der Komponenten der Anreicherungsvorrichtung bildet demnach den ergänzenden Strömungswiderstand oder den Teil des ergänzenden Strömungswiderstands.

Gemäß einer Ausführungsform umfasst die Probenzufuhrvorrichtung und/oder die Detektionsvorrichtung einen Filter zur Reinigung der Fluidströme. Dabei umfasst der erste Strömungspfad bevorzugt einen Partikelfilter. Der Partikelfilter ist als, vorzugsweise austauschbarer, Einsatz im Probeneinlass angeordnet. Alternativ ist der Partikelfilter zwischen Probeneinlass und Probenzufuhrstromeinlass, bevorzugt in einem zylindrischen Übergangskanal, angeordnet und mit diesen jeweils fluidleitend verbunden. Beim Einsatz des Filters in der Detektionsvorrichtung für speziell gasförmige Fluide strömt der Verdünnungsstrom vorzugsweise vor Eintritt in die Mischkammer durch einen vorgeschalteten Trockenfilter wie ein Molekularsieb. Mit anderen Worten umfasst die Detektionsvorrichtung einen Filter zur Entnahme verbleibender Anteile der Probe aus dem Detektionskreislauf, der zwischen Fluidauslass und Verdünnungsstromeinlass angeordnet und mit diesen jeweils fluidleitend verbunden ist. Dadurch wird eine verbesserte Nachweisempfindlichkeit erreicht und verbliebene Bestandteile aus vorherigen Messungen abgehalten, welche eine Auswertung verfälschen würden. Der Probenfluidstrom gelangt über den Mischkammerstromauslass in die Probenkammer. Der Verdünnungsstromeinlass sowie der Mischkammerstromauslass werden vorzugsweise demnach mit zusätzlichen Funktionselementen erweitert. So wird dem Verdünnungsstromeinlass ein Filter wie ein Trockenfilter bzw. Molekularsieb vorgeschaltet. Bekanntlich können mit der Probenaufnahme auch unerwünschte Fremdpartikel wie Staub oder flüssige Bestandteile wie (Nebel-)Tröpfchen oder Aerosole in einer gasförmigen Probe in die Detektionsvorrichtung gelangen. Zur Abtrennung bzw. Abscheidung befindet sich vorzugsweise im Probeneinlass ein als Falle integrierter Partikelfilter, der z. B. als Sieb oder Fritte ausgeführt ist. Dieser ist vorteilhaft als austauschbarer Einsatz im Probeneinlass bzw. in einem zylindrischen Übergangskanal Öffnung zur Mischkammer ausgeführt.

In vorteilhafter Ausführung umfasst das System eine dritte Fördereinrichtung zur Förderung eines Spülstroms vom Probenauslass zum Probeneinlass. Die dritte Fördereinrichtung ist bevorzugt stromaufwärts des Probenauslasses oder stromabwärts des Probeneinlasses bezogen auf eine Strömungsrichtung des Spülstroms angeordnet und mit dem Probenauslass oder dem Probeneinlass fluidleitend verbunden. Die dritte Fördereinrichtung ist ausgebildet, den Spülstrom vom Probenauslass zum Probeneinlass zu bewegen. **In** der Betriebsart Rückspülung kehrt sich die Strömungsrichtung um, so dass der Spülstrom vom Probenauslass in Richtung Probeneinlass mit einem möglichst probenfreien Fluid erfolgt. Der die Probe fördernde Teil der Anordnung lässt sich durch Umkehrung der Förderrichtung des ursprünglichen Trägerstroms vom Probenauslass in Richtung Probeneinlass zum Reinigen der probenführenden Kanäle nutzen, wobei ein probenfreies Fluid, z. B. das ursprünglich probeführende mittels eines Filters gereinigt Fluid, zum Spülen verwendet wird. Ein verfahrenstechnischer Spezialfall bei der Spülung ist, dass die Probenzufuhr in die Mischkammer völlig gesperrt wird, d. h. der optionale erste und/oder zweite Strömungswiderstand sehr groß ist. Das heißt zumindest einer des ersten und zweiten Strömungswiderstands ist deutlich größer als der Teilungsströmungswiderstand, vorzugsweise mehr als 100-mal größer. In diesem Fall fließt auch kein Ausgleichsstrom. Der Detektionskreislauf wird aufrechterhalten, was für die Reinigung der Mischkammer von Vorteil ist.

Gemäß einer Ausgestaltung umfasst die Probenzufuhrvorrichtung einen Filter und/oder eine Heizvorrichtung für den Spülstrom. Bevorzugt wird der Spülstrom durch eine Wandung in der Nähe des Probenauslasses mittels der Heizvorrichtung beheizt, deren Temperatur bevorzugt mit einem Temperatursensor gemessen und mit der Steuereinheit geregelt wird. Im Gegensatz zu einem Membraneinlass wird mit der Dosiereinrichtung mit den zuvor ausgewiesen Merkmalen die maximale Temperatur zum Ausheizen nicht von der Limitierung der Membran wie einer Maximaltemperatur von z. B. 80 °C begrenzt, sondern vom Material der strömungsführenden Wandungen wie Edelstahl oder hitzebeständigem Kunststoff wie Teflon, so dass auch höhere Temperaturen wie 200 °C zum Säubern möglich sind. Da die dritte Fördereinrichtung vorzugsweise eingangsseitig bezogen auf den Spülstrom angeordnet ist, kann auch diese durch den heißen Fluidstrom nicht geschädigt werden.

In weiterer vorteilhafter Ausführung umfasst die Mischkammer eine Trennwand, in der der Probenzufuhrstromeinlass und der Ausgleichsstromauslass angeordnet sind. Der vorhergehend beschrieben optionale ergänzende Strömungswiderstand ist vorzugsweise in die Trennwand integriert, beispielsweise in Form der Strömungsblende.

Gemäß einer Ausgestaltung der Erfindung sind der erste und/oder der zweite Strömungspfad zumindest teilweise lösbar mit der Mischkammer, vorzugsweise mit der Trennwand, verbunden.

In einer weiteren bevorzugten Ausführungsform umfasst die Probenzufuhrvorrichtung ferner eine Probenvorkammer, die zumindest einen Teil des ersten Strömungspfades ausbildet. Mit anderen Worten umfasst das System ferner eine Probenvorkammer, die fluidleitend mit dem Probeneinlass und dem Probenzufuhrstromeinlass verbunden ist. Demnach umfasst der erste Strömungspfad eine Probenvorkammer. Mit anderen Worten wird die Probe somit über den Probeneinlass in die Probenvorkammer mittels der zweiten Fördereinrichtung geleitet, in welcher diese gesammelt, gepuffert oder angereichert werden kann. Aus dieser gelangt die Probe direkt und vollständig in die Mischkammer oder über die optionale Strömungsteilungsvorrichtung anteilig in die Mischkammer und der restliche Anteil in den Probeauslass.

Gemäß einer Ausgestaltung ist die Probenvorkammer direkt, vorzugsweise über die Trennwand, die den Probenzufuhrstromeinlass und den Ausgleichsstromauslass umfasst, mit der Mischkammer mechanisch verbunden. Alternativ ist die Probenvorkammer indirekt durch Leitungen des ersten Strömungspfads mit der Mischkammer verbunden. Probeneinlass und Mischkammer bzw. Probenvorkammer und Mischkammer sind demnach durch eine Trennwand, die bevorzugt als Scheibe ausgeführt ist, voneinander getrennt, in welcher mindestens eine Öffnung, die den Probenzufuhrstromeinlass ausbildet, und mindestens eine Öffnung, die den Ausgleichsstromauslass ausbildet, vorgesehen ist. Durch die Trennwand wird ein modularer Aufbau möglich, mit dem sich Elemente zur Probenzufuhr, insbesondere die Probenzufuhrvorrichtung, von der Trennwand lösen lassen. Hierdurch lassen sich bei einer möglichen Verunreinigung jene Komponenten, welche mit dem Probeneinlass verbunden sind, über eine lösbare Verbindung wie einer Steck-, Schraub- oder Bajonettverbindung lösen, und somit die probeführenden Wände mechanisch durch "Putzen" und/oder chemisch säubern. Die Trennwand dient auch der funktionalen Trennung von Probeneinlass und Mischkammer. Besonders vorteilhaft lässt sich durch den modularen Aufbau der in die Mischkammer verzweigende Teil der optionalen Strömungsteilungsvorrichtung dichtend in die Trennwand stecken und an unterschiedliche Strömungsverhältnisse anpassen und bei Bedarf zum Reinigen entfernen. Hierbei erfolgt der Ausgleichsstrom bevorzugt über mindestens einen als Bohrung ausgeführten Ausgleichsstromauslass mit einem optionalen ergänzenden zweiten Strömungswiderstand.

Vorzugsweise bildet die Probenvorkammer ferner zumindest einen Teil des zweiten Strömungspfades aus. Mit anderen Worten umfasst der zweite Strömungspfad die Probenvorkammer. Die Probenvorkammer ist dabei fluidleitend mit dem Ausgleichsstromauslass und dem Probenauslass verbunden.

Gemäß einer Ausgestaltung ist die Strömungsteilungsvorrichtung bzw. deren Abzweige in, vor oder nach der Probenvorkammer angeordnet. Der Ausgleichsstromauslass mündet vorzugsweise in die Probenvorkammer, wobei die Probenvorkammer dann selbst die Strömungsteilungsvorrichtung ausbildet bzw. umfasst. In diesem Fall besteht eine direkte Verbindung mit dem ersten Strömungspfad und dem zweiten Strömungspfad, sodass der erste Trägerteilstrom weiter entlang des ersten Strömungspfads in Richtung Probenzufuhrstromeinlass strömt und der zweite Trägerteilstrom entlang des dritten Strömungspfads zum zweiten Strömungspfad strömt. Der dritte Strömungspfad sowie zumindest ein Teil des zweiten Strömungspfad sind dann durch die Probenvorkammer ausgebildet. Alternativ kann der Ausgleichsstromauslass über eine separate Leitung innerhalb oder außerhalb der Probenvorkammer mittels dem zweitem Strömungspfad geführt werden, wobei dann keine Strömungsteilungsvorrichtung vorliegen muss. Es kann jedoch eine Verbindungsleitung von der innerhalb oder außerhalb geführten separaten Leitung in die Probenvorkammer vorgesehen sein. Dabei ist der zweite Abzweig der Strömungsteilungsvorrichtung dann einfach durch dieses Verbindungsleitung zum zweiten Strömungspfad und Innenraum der Probenvorkammer gegeben. Der erste Strömungspfad kann einen Rohrabschnitt, der in die Probenvorkammer reicht, umfassen oder eine Öffnung der Probenvorkammer aufweisen. Die Strömungsteilungsvorrichtung kann auch vor oder nach der Probenvorkammer vorgesehen sein.

Eine bevorzugte Ausführungsform der Strömungsteilungsvorrichtung umfasst zwei ineinandergreifende koaxiale zylindrische Rohre. Das innere über den Probenzufuhrstromeinlass in die Mischkammer führende Rohr ist Teil des ersten Strömungspfads und besitzt den ersten Strömungswiderstand. Dieser lässt sich durch mehrere, parallele Zuführungen in die Mischkammer, z. B. als Bohrungen in der optionalen Trennwand zur Mischkammer und/oder rohrartige Kanäle von der Mischkammer, realisieren. Bevorzugt ist das innere Rohr eine Kapillare mit geringer Wandstärke als das äußere Rohr und besitzt ein geringeres Volumen, damit eine geringe Masse und Wärmekapazität und folglich eine geringe Aufwärmzeit vorliegt. Das äußere Rohr ist sowohl Teil des zweiten Strömungspfads als auch des dritten Strömungspfads und umfasst den Teilungsströmungswiderstand. Es kann vorzugsweise zu der Probenvorkammer erweitert werden und führt andererseits zum Probenauslass. Die Strömungsteilung der Strömungsteilungsvorrichtung wird durch den ersten Strömungswiderstand und den Teilungsströmungswiderstand der beiden Rohre bestimmt, die bekannterweise bei zylindrischer Geometrie sowohl vom Strömungsquerschnitt als auch der Kanallänge abhängen. Ist der Probenfluss durch den Probeneinlass etwa durch starkes Ansaugen groß, so muss ein großer Anteil durch den Strömungsteiler über den dritten Strömungspfad zum Probenauslass geleitet werden. In diesen Fall ist der erste Strömungswiderstand und/oder der zweite Strömungswiderstand aus der Mischkammer über den Ausgleichsstromauslass zum Probeauslass viel größer als der Teilungsströmungswiderstand, mindestens jedoch 10-mal größer. Der Teilungsströmungswiderstand vom Probeneinlass zum Probenauslass wird bevorzugt unverändert gelassen, so dass die Strömungsaufteilung durch die Dimensionierung des ersten und zweiten Strömungswiderstandes bestimmt wird.

In vorteilhafter Ausführung umfasst das System ferner ein Gehäuse mit einer Trennwand, das dazu ausgebildet ist, die Mischkammer und die Probenvorkammer auszubilden.

Vorzugsweise umfasst die Trennwand zumindest eine erste Öffnung, die den Probenzufuhrstromeinlass ausbildet, und/oder zumindest eine zweite Öffnung, die den Ausgleichsstromauslass ausbildet.

In weiterer bevorzugter Ausgestaltung der Erfindung ist vorgesehen, dass zumindest ein Teil der fluidleitenden Innenoberflächen des ersten Strömungspfads glatt und/oder inert gegenüber einer Reaktion mit der Probe ist. Dafür weisen die Innenoberflächen eine Oberfläche mit einer absoluten Rauigkeit k von weniger als 0,03 mm auf. Die absolute Rauigkeit k ist vorzugsweise kleiner als 0,02 mm, bevorzugt kleiner als 0,01 mm und besonders bevorzugt kleiner als 0,007 mm. Rauigkeitsmessungen von Oberflächen sind in Form von Linienprofilen und als flächige, dreidimensionale Rauigkeitsmessungen möglich. Die Messung erfolgt vorzugsweise mittels Profilometer-Sonde nach DIN EN ISO 25178. Die Auswertung profilometrischer Analysen ist in den Normen DIN EN ISO 4287 für Linienprofile und DIN EN ISO 25178 für dreidimensionale Rauheitsmessungen von Oberflächen geregelt. In den Normen werden auch die Parameter der Rauigkeitsmessung festgelegt. Die ISO 25178 definiert den oberflächen bezogenen Rauigkeitswert Sa bzw. Ra über das arithmetische Mittel der Topographiehöhe z(x,y). Ein geeignetes optisches Messverfahren ist die konfokale Mikroskopie. Der Oberflächenrauhigkeitswert Sa kann kleiner als 0,04 mm, kleiner als 0,03 mm und kleiner als 0,01 mm sein. Dies hilft bei der Vermeidung von Ablagerungen. Sie sollten inert gegenüber der Reaktion mit dem Probenfluid sein. Dies gestattet auch eine einfache Reinigung der Oberfläche.

Bevorzugt weist zumindest ein Teil von fluidleitenden Innenoberflächen des ersten Strömungspfads eine Beschichtung aus Teflon und/oder Silikat auf.

Vorzugsweise umfasst zumindest ein Teil des ersten Strömungspfads ein hitzebeständiges Material, das eine Widerstandsfähigkeit gegen hohe Temperaturen von mehr als 80°C, vorzugsweise mehr als 130°C und besonders bevorzugt mehr als 160 °C aufweist, oder besteht aus diesem.

Bevorzugt ist das hitzebeständige Material Teflon, Edelstahl und/oder ein passiviertes Metall.

In bevorzugter Ausgestaltung der Erfindung ist vorgesehen, dass die Probenzufuhrvorrichtung eine substanzspezifische Zeitfiltervorrichtung umfasst, die ausgebildet ist, dass in einem kontinuierlichen Betrieb des Systems unterschiedliche in der Probe enthaltene Substanzen zu unterschiedlichen Zeitpunkten von der Detektionsvorrichtung erfasst werden.

In vorteilhafter Ausführung umfasst die substanzspezifische Zeitfiltervorrichtung zumindest einen Teil von fluidleitenden Innenoberflächen des ersten Strömungspfads, die eine Beschichtung aufweisen, wobei die Beschichtung ausgebildet ist, dass unterschiedliche in der Probe enthaltene Substanzen (reversibel) substanzspezifisch und/oder katalytisch mit der Beschichtung wechselwirken (Adsorption und Desorption).

Vorzugsweise ist die substanzspezifische Zeitfiltervorrichtung mit einer Temperaturregelung für die Beschichtung (siehe vorhergehende Erläuterungen) kombiniert, um einen substanzspezifischen Zeitfilter zu realisieren, und die hiermit während einer Detektion gemessenen zeitlichen Unterschiede können als unabhängige Dimension zur Auswertung der Spektren oder der Detektor- bzw. Sensorwerte mittels Controller bzw. Computer verwendet werden.

Gemäß einer weiteren vorteilhaften Ausführung umfasst die Detektionsvorrichtung ein lonenmobilitätsspektrometer, IMS, zum Ermitteln einer lonenmobilität einer Probe, wobei die Probenkammer einen zum Transport von Ionen von einem Schaltgitter zu einem Ionendetektor entgegen einer axialen Driftfluidströmung ausgebildeten zylindrischen Driftraum umfasst. Dabei weist das lonenmobilitätsspektrometer ferner einen an den Driftraum in axialer Richtung angrenzenden zylindrischen Reaktionsraum mit dem zu dem Schaltgitter benachbarten Probenfluideinlass zum Einleiten des Probenfluidstroms auf, wobei dem Schaltgitter benachbart der Fluidauslass zum Ableiten von Driftfluid und von Probenfluid angeordnet ist. Ferner weist das lonenmobilitätsspektrometer eine am Fluidauslass angeordnete Ionisierungsquelle auf, wobei der Probeneinlass mit einer Umgebung oder einem Desorber zur Aufnahme der Probe fluidleitend verbindbar ist. Bei einem lonenmobilitätsspektrometer besteht dann der Vorteil, dass sowohl höhermolekulare Stoffe als auch niedermolekularen Stoffe im Trägerfluid in vergleichbar kurzer Zeit nachgewiesen werden können.

In vorteilhafter Ausgestaltung der Erfindung ist die Steuereinheit ferner dazu eingerichtet, einen Signalwert von der Detektionsvorrichtung, insbesondere von einem Detektor der Detektionsvorrichtung wie einem Ionendetektor oder einem Strahlungsdetektor, in einem Driftraum des IMS angeordneten Ionendetektor zu empfangen, und die Förderleistung der ersten Fördereinrichtung, die Förderleistung der zweiten Fördereinrichtung und/oder den ergänzenden Strömungswiderstand in Abhängigkeit des Signalwerts zu regeln. Mit anderen Worten umfasst die Betriebsgröße einen Signalwert oder eine Folge von Signalwerten des Detektors der Detektionsvorrichtung. Die Folge der Signalwerte kann ein Spektrum oder eine Folge von Spektren und hieraus berechnete Werte beinhalten.

Die Erfindung betrifft ferner eine Probenaufnahmevorrichtung zur Aufnahme und Dosierung einer Probe für das erfindungsgemäße System aufweisend die Mischkammer zur Vermischung des Verdünnungsstroms und des Probenzufuhrstroms, die den Probenzufuhrstromeinlass und den Ausgleichsstromauslass sowie den Verdünnungsstromeinlass und den Mischkammerstromauslass aufweist, wobei der Verdünnungsstromeinlass mit dem Fluidauslass der Detektionsvorrichtung zur Analyse der Probe und der Mischkammerstromauslass mit dem Probenfluideinlass der Detektionsvorrichtung zur Analyse der Probe zur Ausbildung des Detektionskreislaufs fluidleitend verbindbar ist. Die Probenaufnahmevorrichtung umfasst ferner die Probenzufuhrvorrichtung umfassend den mittels eines ersten Strömungspfads mit dem Probenzufuhrstromeinlass fluidleitend verbundenen Probeneinlass zur Einleitung der Probe in das System und den mittels des zweiten Strömungspfads mit dem Ausgleichsstromauslass fluidleitend verbundenen Probenauslass, und die zweite Fördereinrichtung zur Förderung des die Probe enthaltenden Trägerstroms vom Probeneinlass zum Probenauslass.

Die Erfindung betrifft ferner ein Verfahren zur Zufuhr und Analyse einer in einem Probenfluidstrom enthaltenen Probe mit einem erfindungsgemäßen System. Das Verfahren umfasst ein Einleiten des mit der Probe beladenen Trägerstroms über den Probeneinlass durch die zweite Fördereinrichtung zur Förderung des Trägerstroms vom Probeneinlass zum Probenauslass und ein Einleiten des Probenzufuhrstroms in die Mischkammer über den Probenzufuhrstromeinlass mittels des ersten Strömungspfads. Ferner umfasst das Verfahren einen Schritt des Einleitens des Verdünnungsstroms in die Mischkammer über den Verdünnungsstromeinlass durch den von der ersten Fördereinrichtung angetriebenen Detektionskreislauf sowie einen Schritt des Ableitens des Ausgleichsstroms aus der Mischkammer über den Ausgleichsstromauslass mittels des zweiten Strömungspfads. Ferner erfolgt ein Ableiten des Probenfluidstrom aus der Mischkammer über den Mischkammerstromauslass durch den von der ersten Fördereinrichtung angetriebenen Detektionskreislauf und ein Abführen des Trägerstroms über den Probenauslass durch die zweite Fördereinrichtung zur Förderung des Trägerstroms vom Probeneinlass zum Probenauslass.

Die verschiedenen in dieser Anmeldung genannten Ausführungsformen der Erfindung sind, sofern im Einzelfall nicht anders ausgeführt, mit Vorteil miteinander kombinierbar.

### Kurzbeschreibung der Figuren

Die Erfindung wird nachfolgend anhand eines Ausführungsbeispiels und dazugehöriger Zeichnungen näher erläutert. Die Figuren zeigen:
Fig. 1 schematischer Aufbau eines erfindungsgemäßen Systems zur Detektion und Analyse einer in einem Probenfluidstrom enthaltenen Probe,
Fig. 2 vereinfachter Aufbau eines erfindungsgemäßen Systems zur Detektion und Analyse einer in einem Probenfluidstrom enthaltenen Probe,
Fig. 3 schematische Darstellung eines Strömungssystems eines erfindungsgemäßen Systems zur Detektion und Analyse einer in einem Probenfluidstrom enthaltenen Probe.

### Detaillierte Beschreibung der Erfindung

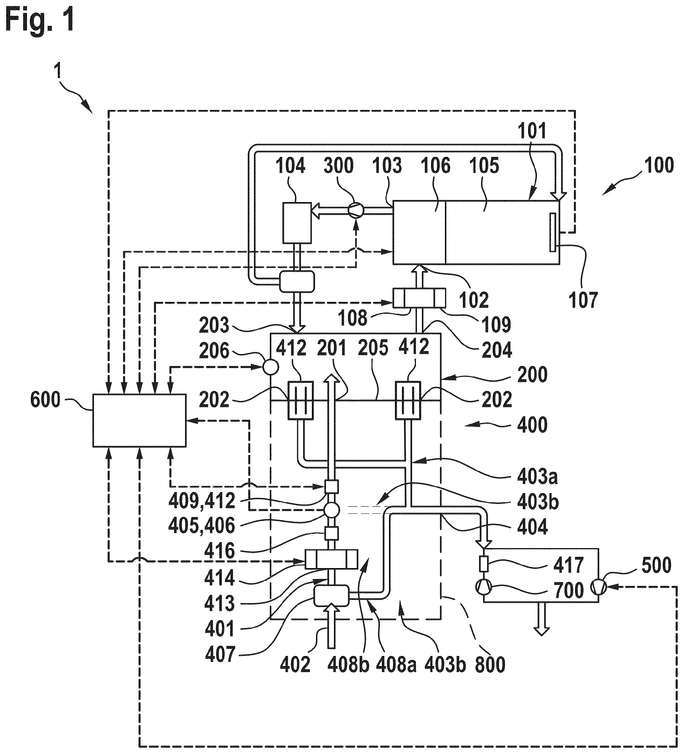

Figur 1 zeigt einen schematischen Aufbau eines erfindungsgemäßen Systems 1 zur Detektion und Analyse einer in einem Probenfluidstrom enthaltenen Probe. Das System umfasst eine Detektionsvorrichtung 100 zur Analyse der Probe, wobei die Detektionsvorrichtung 100, die vorliegend beispielhaft ein lonenmobilitätsspektrometer ist, eine Probenkammer 101 mit einem Probenfluideinlass 102 zur Zufuhr des Probenfluidstroms und einem Fluidauslass 103 enthält, in die die Probe zur Analyse eingebracht wird. Ferner umfasst das System 1 eine Mischkammer 200 zur Vermischung eines Verdünnungsstroms und eines Probenzufuhrstroms, die einen Probenzufuhrstromeinlass 201 und einen Ausgleichsstromauslass 202 sowie einen Verdünnungsstromeinlass 203 und einen Mischkammerstromauslass 204 aufweist, wobei der Verdünnungsstromeinlass 203 mit dem Fluidauslass 103 und der Mischkammerstromauslass 204 mit dem Probenfluideinlass 102 zur Ausbildung eines Detektionskreislaufs fluidleitend verbunden ist. Darüber hinaus verfügt das System 1 über eine erste Fördereinrichtung 300, die ausgebildet ist, den Detektionskreislauf zur Förderung des Probenfluidstroms anzutreiben sowie eine Probenzufuhrvorrichtung 400 umfassend einen mittels eines ersten Strömungspfads 401 mit dem Probenzufuhrstromeinlass 201 fluidleitend verbundenen Probeneinlass 402 zur Einleitung der Probe in das System 1 und einen mittels eines zweiten Strömungspfads 403a, 403b mit dem Ausgleichsstromauslass 202 fluidleitend verbundenen Probenauslass 404. Das System umfasst ferner eine zweite Fördereinrichtung 500 zur Förderung eines die Probe enthaltenden Trägerstroms vom Probeneinlass 402 zum Probenauslass 404.

Die Probenkammer 101 umfasst einen zum Transport von Ionen von einem Schaltgitter zu einem Detektor, speziell einem Ionendetektor, 107 entgegen einer axialen Driftfluidströmung ausgebildeten zylindrischen Driftraum 105. Dabei weist das lonenmobilitätsspektrometer ferner einen an den Driftraum 105 in axialer Richtung angrenzenden zylindrischen Reaktionsraum 106 mit dem zu dem Schaltgitter benachbarten Probenfluideinlass 102 zum Einleiten des Probenfluidstroms auf, wobei dem Schaltgitter benachbart der Fluidauslass 103 zum Ableiten von Driftfluid und von Probenfluid angeordnet ist. Ferner weist das lonenmobilitätsspektrometer eine am Fluidauslass 103 angeordnete Ionisierungsquelle auf.

Das System 1 umfasst ferner eine Steuereinheit 600, die signalleitend mit der ersten Fördereinrichtung 300 und mit der zweiten Fördereinrichtung 500 verbunden und dazu eingerichtet ist, eine erste Förderleistung der ersten Fördereinrichtung 300, und eine zweite Förderleistung der zweiten Fördereinrichtung 500 zu regeln.

Darüber hinaus ist die Steuereinheit mit weiteren Komponenten verbunden wie in Figur 1 durch gestrichelt dargestellte Verbindungsleitungen dargestellt. Die Verbindung zwischen der Steuereinheit 600 und einer der gesteuerten Komponente ist je nach System unterschiedlich gestaltet und dient der Regelung, Überwachung und Kommunikation. Vorzugsweise übernimmt die Steuereinheit 600 zentrale Steuerungs- und Regelungsaufgaben, indem sie Signale an die entsprechende Komponente sendet, um deren Betrieb anzupassen oder zu steuern. Dazu zählen Befehle wie Start, Stopp oder Änderungen bestimmter Betriebsparameter. Alternativ ist eine oder sind mehrere der vorliegenden Komponenten auch mit einer separaten, eigenständigen Steuereinheit ausgestattet, die direkt auf spezifische Anforderungen abgestimmt ist. Vorzugsweise meldet die entsprechende Komponente über Sensoren oder andere Erfassungssysteme Daten wie Betriebszustände oder (Umgebungs-)Parameter an die Steuereinheit 600 zurück. Diese Informationen ermöglichen eine präzise Überwachung des Systems und/oder eine dynamische Anpassung der Steuerung. In komplexeren Systemen, etwa in einem geschlossenen Regelkreis, erfolgt ein kontinuierlicher Abgleich zwischen den aktuellen Betriebsdaten und den Soll-Vorgaben, wodurch eine optimale Funktion sichergestellt wird. Die Kommunikation zwischen Steuereinheit 600 und der entsprechenden Komponente erfolgt also vorzugsweise in beide Richtungen. Steuerungsbefehle fließen von der Steuereinheit 600 zur Komponente, während Rückmeldungen von der Komponente an die Steuereinheit 600 übermittelt werden. Die signalleitende Verbindung ist vorliegend durch die gestrichelten Verbindungslinien zwischen Steuereinheit 600 und den entsprechenden Komponenten dargestellt. Ein von der Steuereinheit 600 ausgehender Pfeil in Richtung der mit der Steuereinheit verbundenen Komponenten zeigt die Richtung von der Steuereinheit 600 ausgehender Signale zu der entsprechenden Komponente. Ein von der jeweiligen Komponente ausgehender Pfeil in Richtung der mit dieser Komponente verbundenen Steuereinheit zeigt die Richtung von der Komponente ausgehender Signale zu der Steuereinheit 600.

Je nach Systemdesign kann die Verbindung auch Energieversorgung umfassen, die von der Steuereinheit 600 oder einer zugeordneten Quelle bereitgestellt wird. Diese Flexibilität erlaubt den Einsatz sowohl zentraler als auch dezentraler Steuerungslösungen.

Das System 1 umfasst ferner Drucksensoren 405 zur Erfassung und Ermittlung eines Differenzdrucks eines Fluidstroms des Probenzufuhrstroms und des Ausgleichsstroms, die mit der Steuereinheit 600 verbunden sind.

Die Mischkammer umfasst vorzugsweise Sensoren 206 für Temperatur, Druck und/oder Zusammensetzung. Hierdurch können die entsprechenden Zustände innerhalb der Mischkammer überwacht werden. Die Sensoren 206 sind mit der Steuereinheit 600 verbunden.

Das System 1 umfasst ferner eine Strömungsteilungsvorrichtung 407, die ausgebildet ist, den Trägerstrom in einen ersten Trägerteilstrom entlang des ersten Strömungspfads 401 zum Probenzufuhrstromeinlass 201 und einen zweiten Trägerteilstrom entlang eines mit dem ersten und mit dem zweiten Strömungspfad 401, 403a, 403b fluidleitend verbundenen dritten Strömungspfads 408a, 408b zum Probenauslass 404 aufzuteilen. Mit anderen Worten umfasst das System 1 ferner einen dritten Strömungspfad 408a, 408b zur Aufteilung des Trägerstroms in mindestens zwei Trägerteilströme, wobei der dritte Strömungspfad 408a, 408b mittels eines ersten Abzweigs fluidleitend mit dem ersten Strömungspfad 401 und mittels eines zweiten Abzweigs fluidleitend mit dem zweiten Strömungspfad 403a, 403b verbunden ist. Hierdurch kann der erste Trägerteilstrom entlang des ersten Strömungspfads 401 in Richtung Probenzufuhrstromeinlass 201 strömen und in diesen münden, wohingegen der zweite Trägerteilstrom entlang des dritten Strömungspfads 408a, 408b in Richtung des zweiten Strömungspfad 403a, 403b strömen und in diesen münden kann.

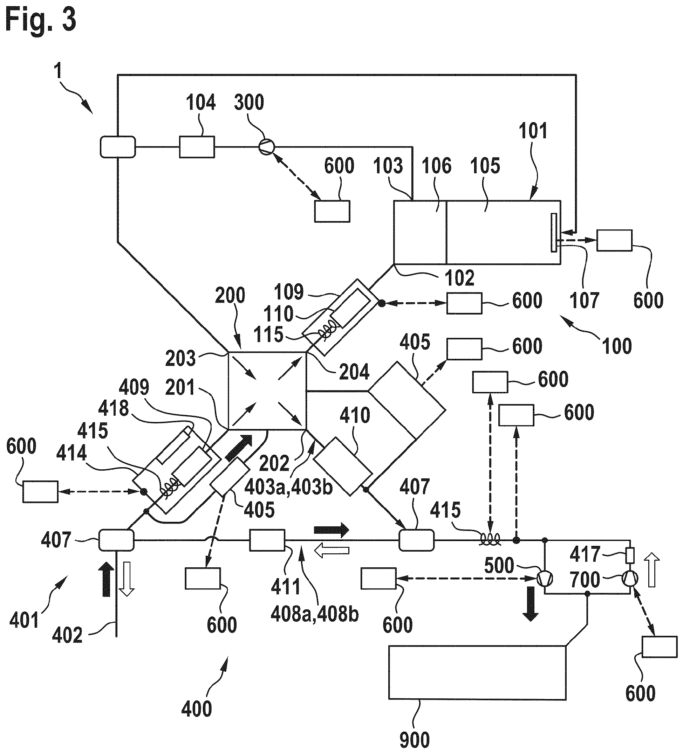

Der erste Strömungspfad 401 umfasst einen ergänzenden ersten Strömungswiderstand 409 und der zweite Strömungspfad 403a, 403b umfasst einen ergänzenden zweiten Strömungswiderstand 410 (siehe Figur 3). Gemäß einer Ausführungsform umfasst der dritte Strömungspfad 408a, 408b einen ergänzenden Teilungsströmungswiderstand 411 (siehe Figur 3).

Vorliegend ist der erste Strömungswiderstand 409 durch einen Stellmechanismus 412 einstellbar. Der erste Strömungswiderstand 409 ist durch die mit dem Stellmechanismus 412 verbundene Steuereinheit 600 automatisiert einstellbar. Die Steuereinheit 600 ist mit dem Stellmechanismus 412 verbunden und ist dazu eingerichtet, den ersten Strömungswiderstand 409 zu steuern oder, vorzugsweise in Abhängigkeit einer Betriebsgröße des Trägerstroms und/oder des Probenzufuhrstroms, zu regeln.

Die Probenzufuhrvorrichtung 400 umfasst eine Homogenisierungsvorrichtung 414 und eine Anreicherungsvorrichtung 413. Die Homogenisierungsvorrichtung 414 umfasst vorliegend eine Heizvorrichtung 415 und einen ergänzenden Strömungswiderstand 409 (siehe Figur 3), und die Anreicherungsvorrichtung 413 umfasst vorliegend eine Kühlvorrichtung. Optional kann die Homogenisierungsvorrichtung 414 der Probenzufuhrvorrichtung auch einen zusätzlichen Mischer umfassen (nicht dargestellt), der für eine weitere gleichmäßige Verteilung von Bestandteilen der Fluidströme in der Probenzufuhrvorrichtung 400 sorgt. Auch die Detektionsvorrichtung 100 umfasst eine Homogenisierungsvorrichtung 109 und eine Anreicherungsvorrichtung 108. Die Homogenisierungsvorrichtung 109 ist vorliegend eine Heizvorrichtung und die Anreicherungsvorrichtung 108 ist vorliegend eine Kühlvorrichtung. Ferner umfasst auch die Homogenisierungsvorrichtung 109 der Detektionsvorrichtung 100 vorzugsweise einen Mischer (nicht dargestellt), der für eine weitere gleichmäßige Verteilung von Bestandteilen des Probenfluidstroms in der Detektionsvorrichtung 100 sorgt. Die Steuereinheit 600 ist mit den vorhergehend genannten Komponenten verbunden und ist dazu eingerichtet, eine Funktion der Anreicherungsvorrichtungen 108, 413 und der Homogenisierungsvorrichtungen 109, 414 zu aktivieren und zu deaktivieren und insbesondere eine Anreicherungsleistung der Anreicherungsvorrichtungen 108, 413 und eine Homogenisierungsleistung der Homogenisierungsvorrichtungen 109, 414 zu steuern oder in Abhängigkeit einer Betriebsgröße des Probenfluidstroms bzw. des Probenzufuhrstroms zu regeln.

Das System 1 umfasst ferner einen Temperatursensor 406 zur Erfassung der Temperaturen des Probenzufuhrstroms, der ebenfalls mit der Steuereinheit 600 verbunden ist.

Die Probenzufuhrvorrichtung 400 umfasst einen Filter 416 zur Reinigung des Probenzufuhrstroms. Auch die Detektionsvorrichtung umfasst einen Filter zur Reinigung des Verdünnungsstroms 104.

Das System umfasst eine dritte Fördereinrichtung 700 zur Förderung eines Spülstroms vom Probenauslass 404 zum Probeneinlass 402. Die dritte Fördereinrichtung 700 ist stromaufwärts des Probenauslasses 404 bezogen auf eine Strömungsrichtung des Spülstroms angeordnet und mit dem Probenauslass 404 fluidleitend verbunden. Zudem umfasst die Probenzufuhrvorrichtung 400 einen Filter 417 zur Reinigung eines Spülstroms während der Betriebsart Spülen.

Ferner umfasst die Probenzufuhrvorrichtung 400 eine Probenvorkammer 800, die zumindest einen Teil des ersten Strömungspfades 401 ausbildet. Mit anderen Worten umfasst das System ferner eine Probenvorkammer 800, die fluidleitend mit dem Probeneinlass 402 und dem Probenzufuhrstromeinlass 203 verbunden ist. Vorliegend sind einige vorhergehend beschrieben Komponenten der Probenzufuhrvorrichtung 400 entsprechend Figur 1 innerhalb der Probenvorkammer 800 angeordnet. Demnach ist es möglich, dass diese Komponenten in einer freien Strömung des Trägerstroms liegen oder mittels fluidleitender Verbindungsleitungen verbunden sind. Im zweiten Fall liegt dann zumindest eine Öffnung zur Verbindung mit der Probenvorkammer 800 vor, die eingangsseitig der verbundenen Komponenten oder ausgangsseitig derselben vorliegen kann.

Das System umfasst ein Gehäuse mit einer Trennwand 205, das dazu ausgebildet ist, die Mischkammer und die Probenvorkammer auszubilden. In der Trennwand 205 sind der Probenzufuhrstromeinlass 201 und der Ausgleichsstromauslass 202 angeordnet.

Ferner gibt es verschiedene Möglichkeiten zur Umsetzung der Strömungsteilungsvorrichtung 407. Beispielsweise kann bei einer Einleitung des Trägerstroms mit einem Rohrabschnitt von diesem eine Leitung als dritter Strömungspfad 408a abgehen. Der Strömungspfad 408a mündet dann vor dem Probenauslass 404 in den zweiten Strömungspfad 403a, der somit ebenfalls zumindest eine mit dem Probenauslass 404 verbundenen Leitung umfassen muss. Alternativ kann der Trägerstrom in die Probenvorkammer 800 münden, wobei der dritte Strömungspfad 408b zumindest teilweise durch einen Innenraum der Probenvorkammer 800 ausgebildet wird. Der zweite Strömungspfad 403b kann dann entweder eine Leitung umfassen, die eine Öffnung zum Innenraum der Probenvorkammer 800 aufweist, sodass darüber die Verbindung mit dem dritten Strömungspfad 408b erfolgt oder keinerlei Leitungen umfassen, sodass zweiter und dritter Strömungspfad 403b, 408b durch den Innenraum ausgebildet werden.

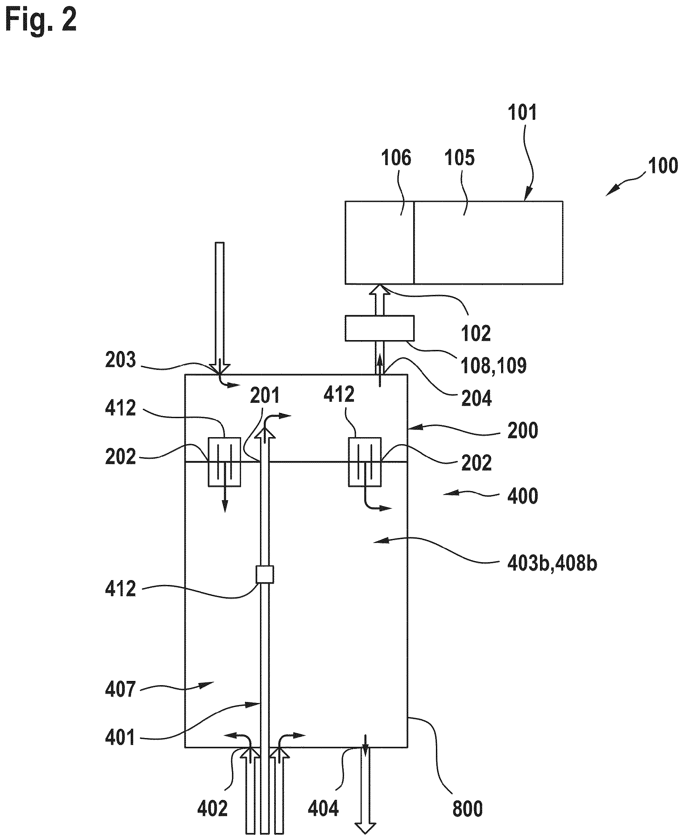

Figur 2 zeigt einen vereinfachten Aufbau eines erfindungsgemäßen Systems 1 zur Detektion und Analyse einer in einem Probenfluidstrom enthaltenen Probe. Mit in der Figur 1 beschriebene Komponenten übereinstimmende Elemente werden nicht erneut erläutert und auf diese ist die entsprechende Beschreibung in Bezug zu Figur 1 anzuwenden. Hier ist eine Variante der Strömungsteilungsvorrichtung 407 gezeigt, bei der der Trägerstrom in die Probenvorkammer 800 eintritt und dort mit einem ersten Trägerteilstrom entlang des ersten Strömungspfads 401, der durch den Innenraum der Probenvorkammer 800 ausgebildet wird, in Richtung Probenzufuhrstromeinlass 201 strömt und über diesen in die Mischkammer 200 als Probenzufuhrstrom eintritt. Ein zweiter Trägerteilstrom strömt entlang des dritten Strömungspfads 408b, der ebenfalls durch den Innenraum der Probenvorkammer 800 ausgebildet wird, in Richtung des zweiten Strömungspfads, der wiederum auch durch den Innenraum der Probenvorkammer 800 ausgebildet wird, vereinigt sich mit dem Ausgleichsstrom zum Trägerstrom, der das System über den Probenauslass 404 verlässt. Die Pfeile deuten nur die Fluidströme an und sind vorliegend nicht als Leitungen aufzufassen.

Figur 3 zeigt eine schematische Darstellung eines Strömungssystems eines erfindungsgemäßen Systems 1 zur Detektion und Analyse einer in einem Probenfluidstrom enthaltenen Probe. Mit in der Figur 1 beschriebene Komponenten übereinstimmende Elemente werden nicht erneut erläutert und auf diese ist die entsprechende Beschreibung in Bezug zu Figur 1 anzuwenden. Dies gilt auch für die Steuereinheit 600, die aus Gründen der Übersichtlichkeit vorliegend als separate Einheiten dargestellt ist. Wie vorhergehend erläutert ist der Einsatz einer oder mehrere Steuereinheiten möglich. Entsprechendes gilt auch für die Verbindungen zwischen der Steuereinheit 600 und entsprechenden Komponenten des Systems 1, die erneut als gestrichelte Linien mit den entsprechenden Pfeilrichtungen dargestellt sind. Der erste Strömungspfad 401 umfasst einen ergänzenden ersten Strömungswiderstand 409 und der zweite Strömungspfad 403a, 403b umfasst einen ergänzenden zweiten Strömungswiderstand 410. Gemäß einer Ausführungsform umfasst der dritte Strömungspfad 408a, 408b einen ergänzenden Teilungsströmungswiderstand 411. Die Ausführung kann sowohl mit als auch ohne Probenvorkammer 800 erfolgen. Ebenfalls können die Strömungspfade 401, 403a, 403b, 408a, 408b unterschiedlich ausgestaltet sein, sei es durch Leitungen oder Kanäle oder einen Innenraum der Probenvorkammer 800. Ferner ist erkennbar, wie mehrere Drucksensoren 405 den Differenzdruck an zwei Punkten mittels Zuleitungen erfassen, um ihn an die Steuereinheit 600 zu übermitteln, die ihre jeweiligen Regelungsfunktion dadurch erfüllen kann.

Die Probe wird vorzugsweise über die Strömungsteilungsvorrichtung 407 entweder vollständig oder anteilig konvektiv über den Probenzufuhrstromeinlass 201 der Mischkammer und über den Mischkammerstromauslass 204 zur Detektionsvorrichtung 100 sowie in Richtung Probenauslass 404 befördert. Dabei wird der in die Mischkammer 200 gelangte erste Trägerteilstrom (also der Probenzufuhrstrom) mit dem Fluidstrom aus dem Verdünnungsstromeinlass 203 vermischt und als Vereinigungsstrom bzw. Probenfluidstrom zum Mischkammerstromauslass 204 konvektiv befördert. Mit anderen Worten ist eine Kombination aus Strömungsteilungsvorrichtung 407 und erstem und zweitem Strömungswiderstand 409, 410 sowie Teilungsströmungswiderstand 411 besonders vorteilhaft. Hierdurch wird der Probenfluss vom Probeneinlass 402 mittels des ersten Strömungswiderstands 409 und des Teilungsströmungswiderstands 411 in den ersten Trägerteilstrom und den zweiten Trägerteilstrom aufgeteilt. Alternativ kann die Strömungsteilung auch ausgangsseitig mittels des Teilungsströmungswiderstands 411 und des zweiten Strömungswiderstands 410 erfolgen. Gleichfalls ist die Strömungsteilung mit sämtlichen ergänzenden Strömungswiderständen möglich. Die Dimensionierung des Strömungsteilers über diese Strömungswiderstände hängt vom gewünschten anteiligen Probenfluss in die Mischkammer ab. Bei einer festen Wahl der Strömungswiderstände kann der Zufluss von der zweiten Fördereinrichtung in gewissen Grenzen verändert werden. Alternativ sind die Strömungswiderstände auch einstelbbar, wobei sie dann über den nicht dargestellten Stellmechanismus 412, der mit der Steuereinheit 600 verbunden ist, verändert werden. Die ausgefüllten Pfeile stellen die Strömungsrichtung bei der Betriebsart Dosieren dar, wohingegen die unausgefüllten Pfeile die Strömungsrichtung bei der Betriebsart Spülen darstellen.

Die Detektionsvorrichtung 100 umfasst einen statischen Mischer 110, der zwischen Mischkammerstromauslass 204 und Probenfluideinlass 102 angeordnet und mit diesen jeweils fluidleitend verbunden ist. Besonders vorteilhaft ist eine Kombination aus Heizvorrichtung 115, die sowohl als Widerstandsheizung als auch als induktive Heizung ausgeführt werden kann, und Mischer 110, durch die das diffusive Vermischen im Mischer 110 mit der Heizvorrichtung befördert wird. Gemäß einer Ausgestaltung umfasst der Mischer 110 dann selbst die Heizvorrichtung. Demnach kann er durch formgebende Heizelemente ausgebildet sein, sodass er beide Funktionalitäten in sich vereint. Alternativ ist der Mischer 110 beheizbar mit der vorliegend als Heizvorrichtung ausgebildeten Homogenisierungsvorrichtung 109.

Ferner umfasst die Probenzufuhrvorrichtung 400 optional eine Anreicherungsvorrichtung, die vorliegend eine Kühlvorrichtung 418 umfasst, wie ein Peltier-Element zum Zwecke der Anreicherung bzw. der Kondensation oder Abscheidung gasförmiger Probendämpfe wie Wasser, die optional über eine Wärmebrücke mit dem ersten Strömungspfad 401 verbunden ist. Zudem umfasst die Probenzufuhrvorrichtung 400 eine Homogenisierungsvorrichtung 414, vorzugsweise in Form des ergänzenden Strömungswiderstands 409 in Kombination mit einer Heizvorrichtung 415, die zwischen Probeneinlass 402 und Probenzufuhrstromeinlass 201 angeordnet ist. Vorliegend sind die Homogenisierungsvorrichtung 414 und die Kühlvorrichtung 418 als ein integrales Element ausgebildet. Es ist alternativ auch möglich, dass Homogenisierungsvorrichtung 414 und Kühlvorrichtung 418 als separate Elemente vorliegen. Gemäß einer Ausgestaltung ist die Heizvorrichtung sowie die Kühlvorrichtung 418 vorzugsweise über eine Wärmebrücke mit dem ersten Strömungspfad 401 verbunden (nicht dargestellt). Besonders vorteilhaft ist die Homogenisierungsvorrichtung 414, beispielweise in Form des Strömungswiderstands 409 und der Heizvorrichtung 415, stromabwärts der Strömungsteilungsvorrichtung 407 und stromaufwärts des Probenzufuhrstromeinlasses 201 angeordnet. Analoges gilt für die Anreicherungsvorrichtung, beispielsweise in Form der Kühlvorrichtung 418 wie dem Peltier-Element. Über die Wärmebrücke lässt sich der erste Strömungspfad 401 vorzugsweise sowohl heizen als auch kühlen. Optional umfasst die Homogenisierungsvorrichtung 414 neben der Heizvorrichtung 415 einen Mischer (nicht dargestellt). Dieser eignet sich besonders vorteilhaft bei der Untersuchung von Fluiden wie Aerosolen. Die Vermischung von Aerosolen durch den Mischer erfolgt, indem das Trägermedium (z. B. der Trägerstrom oder der Probenzufuhrstrom) und die suspendierten Partikel durch mechanische Einwirkung, wie Wirbelerzeugung oder turbulente Strömungen, gleichmäßig verteilt werden. Der Mischer der Probenzufuhrvorrichtung 400 sorgt dafür, dass Partikel homogen verteilt bleiben und Inhomogenitäten minimiert werden. Faktoren wie die Partikelgröße, Strömungsgeschwindigkeit und die Geometrie des Mischers beeinflussen dabei die Effizienz der Vermischung. Hierdurch wird folglich die Vermischung mit dem Verdünnungsstrom in der Mischkammer begünstigt.

Die Homogenisierungsvorrichtungen 109, 414 umfassen vorliegend jeweils eine Heizvorrichtung 415, 115. Die Homogenisierungsvorrichtung 414 der Probenzufuhrvorrichtung 400 umfasst ferner vorliegend den ergänzenden Strömungswiderstand 409. Die Homogenisierungsvorrichtung 109 der Detektionsvorrichtung 100 umfasst ferner einen Mischer 110 sowie die Heizvorrichtung 115.

Der ergänzende Strömungswiderstand, insbesondere der ergänzende erste Strömungswiderstand 409, ist vorzugsweise mittels der Heizvorrichtung 415 auf eine vorgegebene Betriebstemperatur temperierbar. Dies kann vorliegend durch die die Heizvorrichtung 415 umfassende Homogenisierungsvorrichtung 414 erfolgen. Alternativ ist eine separate Heizvorrichtung wie eine Heizspirale, Heizwendel oder induktive Heizung vorgesehen, die unabhängig von anderen Vorgängen den ergänzenden Strömungswiderstand 409 und insbesondere dessen strömungsführende Wandungen beheizt. Eine solche Heizvorrichtung ist optional auch für den ergänzenden zweiten Strömungswiderstand 410 und/oder den Teilungsströmungswiderstand 411 vorgesehen, kann jedoch auch entfallen. Die Leitungen und Kanäle können auch während eines Rückspülens gereinigt werden.

In vorteilhafter Ausführung umfasst das System eine dritte Fördereinrichtung 700 zur Förderung eines Spülstroms vom Probenauslass 404 zum Probeneinlass 402. Die dritte Fördereinrichtung 700 ist stromaufwärts des Probenauslasses 404 angeordnet und mit dem Probenauslass 404 fluidleitend verbunden. Die dritte Fördereinrichtung 700 ist ausgebildet, den Spülstrom vom Probenauslass 404 zum Probeneinlass 402 zu bewegen. In der Betriebsart Rückspülung kehrt sich die Strömungsrichtung um, so dass der Spülstrom vom Probenauslass 404 in Richtung Probeneinlass 402 mit einem möglichst probenfreien Fluid erfolgt. Ein verfahrenstechnischer Spezialfall bei der Spülung ist, dass die Probenzufuhr in die Mischkammer 200 völlig gesperrt wird, d. h. der optionale erste und/oder zweite Strömungswiderstand 409, 410 sehr groß ist. Das heißt zumindest einer des ersten und zweiten Strömungswiderstands 409, 410 ist deutlich größer als der Teilungsströmungswiderstand 411, vorzugsweise mehr als 100-mal größer. In diesem Fall fließt auch kein Ausgleichsstrom. Der Detektionskreislauf wird aufrechterhalten, was für die Reinigung der Mischkammer von Vorteil ist. Die Betriebsart "Spülen" bzw. die dabei auftretende Strömungsrichtung ist durch die nicht ausgefüllten Pfeile dargestellt. Die Betriebsart "Dosieren" bzw. die dabei auftretende Strömungsrichtung ist durch die ausgefüllten Pfeile dargestellt.

Die Probenzufuhrvorrichtung umfasst einen Filter 417 und eine weitere Heizvorrichtung 415 für den Spülstrom, die zwischen Ausgleichsstromauslass 202 und Probenauslass 404 angeordnet ist. Bevorzugt wird der Spülstrom durch eine Wandung in der Nähe des Probenauslasses 404 mittels der Heizvorrichtung 415 beheizt, deren Temperatur bevorzugt mit einem Temperatursensor (nicht dargestellt) gemessen und mit der Steuereinheit 600 geregelt wird.

### Bezugszeichenliste

- 1: System
- 100: Detektionsvorrichtung
- 101: Probenkammer
- 102: Probenfluideinlass
- 103: Fluidauslass
- 104: Filter
- 105: Driftraum
- 106: Reaktionsraum
- 107: Detektor, speziell Ionendetektor
- 108: Anreicherungsvorrichtung
- 109: Homogenisierungsvorrichtung
- 110: Mischer
- 115: Heizvorrichtung
- 200: Mischkammer
- 201: Probenzufuhrstromeinlass
- 202: Ausgleichsstromauslass
- 203: Verdünnungsstromeinlass
- 204: Mischkammerstromauslass
- 205: Trennwand
- 206: Sensoren
- 300: erste Fördereinrichtung
- 400: Probenzufuhrvorrichtung
- 401: erster Strömungspfad
- 402: Probeneinlass
- 403a, 403b: zweiter Strömungspfad
- 404: Probenauslass
- 405: Drucksensor
- 406: Temperatursensor
- 407: Strömungsteilungsvorrichtung
- 408a, 408b: dritter Strömungspfad
- 409: ergänzender erster Strömungswiderstand
- 410: ergänzender zweiter Strömungswiderstand
- 411: ergänzender dritter Strömungswiderstand
- 412: Stellmechanismus
- 413: Anreicherungsvorrichtung (Kühlvorrichtung)
- 414: Homogenisierungsvorrichtung (Mischer)
- 415: Heizvorrichtung
- 416, 417: Filter
- 418: Kühlvorrichtung
- 500: zweite Fördereinrichtung
- 600: Steuereinheit
- 700: dritte Fördereinrichtung
- 800: Probenvorkammer
- 900: Umgebung

## Patentansprüche

1. System (1) zur Detektion und Analyse einer in einem Probenfluidstrom enthaltenen Probe aufweisend:
eine Detektionsvorrichtung (100) zur Analyse der Probe, wobei die Detektionsvorrichtung (100) eine Probenkammer (101) mit einem Probenfluideinlass (102) zur Zufuhr des Probenfluidstroms und einem Fluidauslass (103) enthält, in die die Probe zur Analyse eingebracht wird;
eine Mischkammer (200) zur Vermischung eines Verdünnungsstroms und eines Probenzufuhrstroms, die einen Probenzufuhrstromeinlass (201) und einen Ausgleichsstromauslass (202) sowie einen Verdünnungsstromeinlass (203) und einen Mischkammerstromauslass (204) aufweist, wobei der Verdünnungsstromeinlass (203) mit dem Fluidauslass (103) und der Mischkammerstromauslass (204) mit dem Probenfluideinlass (102) zur Ausbildung eines Detektionskreislaufs fluidleitend verbunden ist,
eine erste Fördereinrichtung (300), die ausgebildet ist, den Detektionskreislauf zur Förderung des Probenfluidstroms anzutreiben,
eine Probenzufuhrvorrichtung (400) umfassend einen mittels eines ersten Strömungspfads (401) mit dem Probenzufuhrstromeinlass (201) fluidleitend verbundenen Probeneinlass (402) zur Einleitung der Probe in das System (1) und einen mittels eines zweiten Strömungspfads (403a, 403b) mit dem Ausgleichsstromauslass (202) fluidleitend verbundenen Probenauslass (404),
und eine zweite Fördereinrichtung (500) zur Förderung eines die Probe enthaltenden Trägerstroms vom Probeneinlass (402) zum Probenauslass (404).

2. System (1) nach Anspruch 1, ferner umfassend eine Steuereinheit (600), die mit der ersten Fördereinrichtung (300) und/oder mit der zweiten Fördereinrichtung (500) verbunden und dazu eingerichtet ist, eine erste Förderleistung der ersten Fördereinrichtung (300), und/oder eine zweite Förderleistung der zweiten Fördereinrichtung (500) zu steuern oder zu regeln.

3. System (1) nach Anspruch 1 oder 2, die Probenzufuhrvorrichtung (400) ferner umfassend eine Strömungsteilungsvorrichtung (407), die ausgebildet ist, den Trägerstrom in einen ersten Trägerteilstrom entlang des ersten Strömungspfads (401) zum Probenzufuhrstromeinlass (201) und einen zweiten Trägerteilstrom entlang eines mit dem ersten und mit dem zweiten Strömungspfad (401, 403a, 403b) fluidleitend verbundenen dritten Strömungspfads (408a, 408b) zum Probenauslass (404) aufzuteilen.

4. System (1) nach einem der vorhergehenden Ansprüche, wobei die Probenzufuhrvorrichtung (400) zumindest einen ergänzenden Strömungswiderstand (409, 410, 411) umfasst.

5. System (1) nach einem der vorhergehenden Ansprüche, ferner umfassend:
eine Anreicherungsvorrichtung (108, 413) zur Anreicherung der Probe im Probenfluidstrom, Trägerstrom und/oder Probenzufuhrstrom, und/oder
eine Homogenisierungsvorrichtung (109, 414) zur Vermischung der Probe im Probenfluidstrom, Trägerstrom und/oder Probenzufuhrstrom und/oder zur Kondensationsminderung der Probe.

6. System (1) nach einem der vorhergehenden Ansprüche, ferner umfassend eine dritte Fördereinrichtung (700) zur Förderung eines Spülstroms vom Probenauslass (404) zum Probeneinlass (402).

7. System (1) nach einem der vorhergehenden Ansprüche, wobei die Mischkammer (200) eine Trennwand (205) umfasst, in der der Probenzufuhrstromeinlass (201) und der Ausgleichsstromauslass (202) angeordnet sind.

8. System (1) nach einem der vorhergehenden Ansprüche, wobei der erste und/oder der zweite Strömungspfad (401, 403) zumindest teilweise lösbar mit der Mischkammer (200) verbunden sind.

9. System (1) nach einem der vorhergehenden Ansprüche, wobei die Probenzufuhrvorrichtung (400) ferner eine Probenvorkammer (800) umfasst, die zumindest einen Teil des ersten Strömungspfades (401) ausbildet.

10. System (1) nach Anspruch 9, ferner umfassend ein Gehäuse mit einer Trennwand (205), das dazu ausgebildet ist, die Mischkammer (200) und die Probenvorkammer (800) auszubilden.

11. System (1) nach einem der vorhergehenden Ansprüche, wobei zumindest ein Teil der fluidleitenden Innenoberflächen des ersten Strömungspfads (401) glatt und/oder inert gegenüber einer Reaktion mit der Probe ist.

12. System (1) nach einem der vorhergehenden Ansprüche, wobei die Probenzufuhrvorrichtung (400) eine substanzspezifische Zeitfiltervorrichtung umfasst, die ausgebildet ist, dass in einem kontinuierlichen Betrieb des Systems (1) unterschiedliche in der Probe enthaltene Substanzen zu unterschiedlichen Zeitpunkten von der Detektionsvorrichtung (100) erfasst werden.

13. System (1) nach einem der vorhergehen Ansprüche, wobei die Detektionsvorrichtung (100) ein lonenmobilitätsspektrometer zum Ermitteln einer lonenmobilität einer Probe umfasst, wobei die Probenkammer (101) einen zum Transport von Ionen von einem Schaltgitter zu einem Ionendetektor (107) entgegen einer axialen Driftfluidströmung ausgebildeten zylindrischen Driftraum (105) umfasst, das lonenmobilitätsspektrometer ferner aufweisend:
einen an den Driftraum (105) in axialer Richtung angrenzenden zylindrischen Reaktionsraum (106) mit dem zu dem Schaltgitter benachbarten Probenfluideinlass (102) zum Einleiten des Probenfluidstroms, wobei dem Schaltgitter benachbart der Fluidauslass (103) zum Ableiten von Driftfluid und von Probenfluid angeordnet ist, und
eine am Fluidauslass (103) angeordnete lokale Ionisierungsquelle,
wobei der Probeneinlass (402) mit einer Umgebung oder einem Desorber zur Aufnahme der Probe fluidleitend verbindbar ist.

14. Probenaufnahmevorrichtung zur Aufnahme und Dosierung einer Probe für das System (1) nach einem der vorhergehenden Ansprüche aufweisend:
die Mischkammer (200) zur Vermischung des Verdünnungsstroms und des Probenzufuhrstroms, die den Probenzufuhrstromeinlass (201) und den Ausgleichsstromauslass (202) sowie den Verdünnungsstromeinlass (203) und den Mischkammerstromauslass (204) aufweist, wobei der Verdünnungsstromeinlass (203) mit dem Fluidauslass (103) der Detektionsvorrichtung (100) zur Analyse der Probe und der Mischkammerstromauslass (204) mit dem Probenfluideinlass (102) der Detektionsvorrichtung (100) zur Analyse der Probe zur Ausbildung des Detektionskreislaufs fluidleitend verbindbar ist,
die Probenzufuhrvorrichtung (400) umfassend den mittels eines ersten Strömungspfads (401) mit dem Probenzufuhrstromeinlass (201) fluidleitend verbundenen Probeneinlass (402) zur Einleitung der Probe in das System (1) und den mittels des zweiten Strömungspfads (403) mit dem Ausgleichsstromauslass (202) fluidleitend verbundenen Probenauslass (404),
und die zweite Fördereinrichtung (500) zur Förderung des die Probe enthaltenden Trägerstroms vom Probeneinlass (402) zum Probenauslass (404).

15. Verfahren zur Zufuhr und Analyse einer in einem Probenfluidstrom enthaltenen Probe mit einem System (1) nach einem der Ansprüche 1 bis 13, wobei das Verfahren folgende Schritte umfasst:
Einleiten des mit der Probe beladenen Trägerstroms über den Probeneinlass (402) durch die zweite Fördereinrichtung (500) zur Förderung des Trägerstroms vom Probeneinlass (402) zum Probenauslass (404);
Einleiten des Probenzufuhrstroms in die Mischkammer (200) über den Probenzufuhrstromeinlass (201) mittels des ersten Strömungspfads (401);
Einleiten des Verdünnungsstroms in die Mischkammer (200) über den Verdünnungsstromeinlass (203) durch den von der ersten Fördereinrichtung (300) angetriebenen Detektionskreislauf;
Ableiten des Ausgleichsstroms aus der Mischkammer (200) über den Ausgleichsstromauslass (202) mittels des zweiten Strömungspfads (403);
Ableiten des Probenfluidstrom aus der Mischkammer (200) über den Mischkammerstromauslass (204) durch den von der ersten Fördereinrichtung (300) angetriebenen Detektionskreislauf; und
Abführen des Trägerstroms über den Probenauslass (404) durch die zweite Fördereinrichtung (500) zur Förderung des Trägerstroms vom Probeneinlass (402) zum Probenauslass (404).
